# EUROPEAN PATENT SPECIFICATION

(11) **EP 2 607 413 B1**
(45) Date of publication and mention of the grant of the patent: **21.06.2017**
(21) Application number: 12198703.6
(22) Date of filing: 20.12.2012
(51) Int. Cl.: C08G 77/16, C09D 183/04, C08J 7/04

(54) **Plastic Substrate for Automotive Glazing and Its Repairing Method**
Kunststoffsubstrat zur Automobilverglasung und Reparaturverfahren dafür
Substrat en plastique pour vitrage automobile et son procédé de réparation

(30) Priority: 22.12.2011 JP 2011281815
(43) Date of publication of application: 26.06.2013
(73) Proprietor: Shin-Etsu Chemical Co., Ltd., Chiyoda-ku Tokyo (JP); KABUSHIKI KAISHA TOYOTA JIDOSHOKKI, Kariya-shi, Aichi-ken (JP)
(72) Inventor: Fukushima, Motoo, Annaka-shi, Gunma (JP); Aoki, Yukimasa, Annaka-shi, Gunma (JP); Chigita, Koichi, Kariya-shi, Aichi (JP); Munekata, Hidenori, Kariya-shi, Aichi (JP)
(74) Representative: Ter Meer Steinmeister & Partner

(56) References cited:
- EP-A1- 1 826 239
- EP-A1- 1 914 259
- EP-A1- 2 426 175

## Description

### TECHNICAL FIELD

This invention relates to a plastic substrate for automotive glazing and its repairing method. More specifically, this invention relates to a plastic substrate for automotive glazing prepared by forming a primer coating on the substrate and a laminate of hard coatings on the primer coating, each hard coating comprising an organopolysiloxane composition containing a basic curing catalyst. This invention also relates to a method for repairing a plastic substrate for automotive glazing using the hard coating.

### BACKGROUND ART

Lightweight, non-shattering, transparent resin materials have been widely used as a substitute for transparent sheet glass. More specifically, plastic substrates such as polycarbonate substrates are currently used for structural members in place of glass in various applications including windows of vehicles and covers of measuring instruments since they have excellent properties such as transparency, impact resistance, and heat resistance.

However, there is a strong demand for improvements in the surface properties of the plastic substrate such as polycarbonate resin because their surface properties like scratch resistance and weatherability are poor as compared to the glass.

Scratch resistance of the articles molded from a polycarbonate resin has been improved, for example, by coating surface of the resin substrate with a thermosetting resin such as organopolysiloxane, and weatherability has been improved, for example, by providing the surface of the resin substrate with a weatherable resin layer containing a UV-absorbing agent. Coating compositions used for providing the surface of the resin substrate with a surface protective coating for improving hardness and scratch resistance include a coating composition prepared by hydrolysis or partial hydrolysis of a hydrolysable organosilane, and a coating composition prepared by mixing such composition with colloidal silica. JP-A S63-168470 discloses a coating composition comprising a hydrolyzate of an organoalkoxysilane and/or its partial condensate and colloidal silica, wherein the alkoxy group has been converted into silanol in the presence of excess water.

Coating of the plastic substrate by a silicone coating composition has been carried out by applying a primer composition on the substrate by flow coating, and then forming a silicone hard coating composition by thermosetting.

However, despite its excellent hardness which contributed for the scratch resistance and protection of the substrate, this coating suffered from insufficient toughness and difficulty in forming the silicone laminate since direct formation of the silicone layer on another silicone layer was difficult, namely, since adhesion of the silicone layer which is crosslinkable under basic condition on the silicone layer which has already been cured by basic curing catalyst was difficult. As a consequence, the resulting laminate suffered from the risk of cracks during the curing at elevated temperature and in the case of rapid temperature change during its use in the exterior.

When a part with uneven thickness or dust attachment is found in the coating process, the part is repaired by removing or grinding the part to expose the naked plastic substrate and repairing the exposed part by coating the part with a repairing composition. However, direct deposition of a silicone layer on another silicone layer is difficult, and therefore, time-consuming, complicated steps starting over from the deposition of a primer layer capable of realizing strong adhesion was necessary. In addition, in the repairing of the damaged part of the coating, curing of the coating obtained, for example, by manual air spraying was often different from other parts due to the significant difference in physical properties between the flow-coated primer and the silicone coating, and in such a case, the coating in the repaired part was not glossy like the coating in other non-repaired parts, and the coating in the repaired part had an appearance different from that of other parts. EP 2 426 175 A1 relates to a plastic article wherein a plastic substrate is coated with multiple resin layers including a primer layer comprising a polymer having a UV-absorptive functional group incorporated therein and a weather resistant hardcoat layer comprising a reaction product of alkoxysilyl-containing benzophenone and/or a hydrolyzate thereof.

EP 1 826 239 A1 relates to a curable composition comprising a vinyl polymer having hydrolyzable silyl groups and/or SiOH groups and organic UV absorbing groups bonded to side chains, and an organosilicon compound containing a nitrogen atom and an alkoxysilyl group in the molecule, wherein the curable composition is coated and cured to an article. EP 1 914 259 A1 relates to a primer composition for a polysiloxane hard coating, wherein the primer composition comprises a vinyl polymer having a hydrolyzable silyl group and/or SiOH group and an organic UV absorbing group bonded to its side chain, and fine silica particles dispersed in an organic solvent, and the primer layer formed after coating.

### SUMMARY OF INVENTION

### Technical Problem

The present invention has been accomplished in view of the situation as described above, and an object of the present invention is to provide a plastic substrate for automotive glazing wherein a laminate of silicone hard coating layers (a silicone hard coating layer directly overlaid with another silicone hard coating layer) are formed on the substrate. Another method of the present invention is to provide a method for repairing such plastic substrate for automotive glazing wherein a silicone hard coating layer is overcoated for repairing, and the resulting coating has substantially equivalent physical properties such as transparency, scratch resistance (high hardness), and adhesion as the underlying silicone hard coating layer.

### Solution to Problem

The present invention provides a plastic substrate for automotive glazing according to claim 1.

The present invention also provides a method for repairing a plastic substrate for automotive glazing according to claim 8.
Preferred embodiments of the invention are defined in the dependent claims.

The present invention is plastic substrate for automotive glazing which is a resin-coated article comprising a plastic substrate and resin layers comprising at least 3 layers disposed on the plastic substrate, the 3 layers comprising
first layer in contact with the substrate surface, which is a layer prepared by curing a coating composition containing a vinyl copolymer having an alkoxysilyl group and a UV-absorbing group and a fine particle silicon oxide and not containing any curing catalyst;
second layer in contact with the first layer, which is a layer prepared by curing an organopolysiloxane composition containing a curing catalyst in the form of an alkylammonium compound other than methylammonium compounds and a co-hydrolyzate of an organosilicon compound containing a UV-absorbing organooxysilane and a fine particle silicon oxide; and
third layer in contact with the second layer, which is a layer prepared by curing an organopolysiloxane composition containing a curing catalyst in the form of a methylammonium compound having an activity higher than the catalyst used in the second layer, and a co-hydrolyzate of an organosilicon compound containing a UV-absorbing organooxysilane and a fine particle silicon oxide.

Since the cured coating should have improved transparency, hardness, adhesion, and weatherability with reduced deterioration even in the long-term exterior exposure, the first layer is a layer formed from a coating agent containing a UV-absorbing vinyl copolymer comprising the following components (a) to (c), the second and the third layers are respectively a layer formed from a UV-absorbing organopolysiloxane composition containing the following (i) to (iv), wherein the curing catalyst of the third layer has an activity higher than the curing catalyst of the second layer.

The components (a) to (c) are:
(a) a UV-absorbing vinyl monomer,
(b) an alkoxysilyl group-containing vinyl monomer, and
(c) a vinyl monomer other than (a) and (b); and a fine particle silicon oxide.

The components (i) to (iv) are:
(i)
   (A) at least one hydrolysable silicon compound represented by the following formula (1):

      R'ₐSi(OR")₍₄₋ₐ₎ (1)

      wherein R' is an organic group containing 1 to 18 carbon atoms, R" is independently an organic group containing 1 to 6 carbon atoms, and a is an integer of 0 ≤ a ≤ 2;
   (B) a reactive UV-absorbing agent which is a benzophenone having an alkoxysilyl group;
(ii) a fine particle silicon dioxide;
(iii) a siloxane resin having a weight average molecular weight of at least 2,000 which is solid at a temperature of up to 40°C and which is represented by the following average compositional formula (2):

   R"'_{b}Si(OR"")_{c}(OH)_{d}O_{(4-b-c-d)/2} (2)

   wherein R"' is independently an organic group containing 1 to 18 carbon atoms, R"" is independently an organic group containing 1 to 4 carbon atoms, b, c and d are numbers in the range: 0.8 ≤ b ≤ 1.5, 0 ≤ c ≤ 0.3, 0.001 ≤ d ≤ 0.5, and 0.801 ≤ b+c+d < 2; and
(iv) a curing catalyst,
the organopolysiloxane composition being prepared from the components (i) to (iv) by blending the components (iii) and (iv) with co-hydrolyzate (partial hydrolyzate) or co-condensation hydrolyzate (partial condensation hydrolyzate) of the components (i)(A) and (ii) are co-hydrolyze in the presence of (i)(B).

The present invention is capable forming a silicone hard coating (third layer) on the silicone hard coating (second layer), and use of the third layer coating for the repairing enables curing of the repairing layer similar to the curing of the original third layer irrespective of the method used for the coating. As a consequence, the coating of the repaired part has an appearance and physical properties similar to the coating of the area other than the repaired part.

Next, absence of the curing catalyst in the primer coating composition (the coating composition used for the formation of the first layer) and difference in the activity of the curing catalyst in the silicone hard coating compositions for the overlying two layers are explained.

The primer composition does not contain the curing catalyst, and therefore, the part in contact with the substrate is a non-crosslinked coating whose physical properties are primarily determined by the molecular weight of the resin, and which has high flexibility to correspond to the stress applied by exterior force with high adhesion to the underlying layer. The silicone hard coating composition (the organopolysiloxane composition used for the formation of the second layer) disposed on this primer layer contains a basic curing catalyst, and due to formation of the bond with the silica at high crosslinking density, this layer exhibits high scratch resistance. In addition, the primer layer (first layer) and the silicone hard coating layer (second layer) exhibits strong adhesion since these layers are crosslinked by the curing catalysts in the silicone hard coating composition.

The curing catalyst in the silicone hard coating composition promotes curing by the crosslinking attained in the condensation between the silanol group and the alkoxy silyl group in the silicon compound to realize hardness and adhesion to the substrate of the hard coating layer. The curing catalyst may be formed from a basic curing agent and an acidic regulator agent.

The basic curing agent is preferably an organic ammonium compound, which promotes condensation and curing by crosslinking. However, use of the basic curing agent alone is associated with the risk of gelation during the storage. The acidic regulating agent is preferably a weakly acidic organic acid, and this weakly acidic organic acid regulates condensation between the silanol group and the alkoxysilyl group during the storage of the composition to retain the adequate liquid state while allowing formation of the cured film once the composition is applied to the substrate.

A curing system with weak activity may be prepared by combining a catalyst with weak activity and a regulating agent with strong activity, or by combining a small amount of catalyst with a large amount of regulating agent. A curing system with strong activity may be prepared by combining a catalyst with strong activity and a regulating agent with weak activity, or by combining a large amount of catalyst with a small amount of regulating agent.

The organic ammonium compound, and in particular, a quaternary ammonium compound is different from alkaline metal hydroxides, and when exposed to a temperature of 100 to 300°C, it readily decomposes into an amine having a low boiling point and an alcohol to lose its basicity. Conceivably, this contributes to the improvement of the durability of the hard coating after the curing. The organic ammonium compound has general structure represented by the following formula (3):

[(R¹) (R²) (R³) (R⁴)N]⁺ X⁻ (3)

wherein R¹, R², R³, and R⁴ are independently hydrogen atom or an alkyl group or a halogenated alkyl group containing 1 to 18 carbon atoms, at least one of which being methyl group, and X⁻ is a hydroxide anion or an organic carboxylate anion.

Exemplary catalyst with low catalytic activity is an alkylammonium compound other than those wherein the alkyl group is a group other than methyl, and exemplary catalyst with high catalytic activity is an alkylammonium compound wherein the alkyl group is methyl. Exemplary regulating agent with low regulating activity is a carboxylic acid compound having a high molecular weight while exemplary regulating agent with low regulating activity is a carboxylic acid compound having a low molecular weight.

The long term improved hardness and the long term strong adhesion which are contradictory to each other have been realized by disposing a silicone hard coating layer having a curing catalyst with high curing activity added thereto on a silicone hard coating layer having a curing catalyst with low curing activity added thereto.

### Advantageous Effects of Invention

The present invention is capable of providing a plastic substrate for automotive glazing exhibiting excellent transparency, hardness, adhesion, and weatherability.

The present invention has also enabled the repairing by overcoating a silicone hard coating composition as a repairing composition, and the resulting coating has a coating appearance and physical properties similar to the underlying silicone hard coating. In this repairing, the coating can be conducted without reformation of the primer layer, and the repairing can be readily accomplished without troublesome processes and the finishing has reduced variation.

### DESCRIPTION OF EMBODIMENTS

This invention relates to a plastic substrate for automotive glazing having improved durability and scratch resistance, and such properties have been realized by coating layers of the plastic substrate comprising a combination of UV-absorbing silicone hard coating layers (second and third layers) and UV-absorbing primer layer (first layer).

More specifically, this invention relates to a plastic substrate for automotive glazing which is a resin-coated article comprising a plastic substrate and resin layers comprising at least 3 layers disposed on the plastic substrate, the 3 layers comprising
first layer in contact with the substrate surface, which is a layer containing a vinyl copolymer having an alkoxysilyl group and a UV-absorbing group and a fine particle silicon oxide and not containing any curing catalyst;
second layer in contact with the first layer, which is a layer prepared by curing an organopolysiloxane composition containing a curing catalyst in the form of an alkylammonium compound other than methylammonium compounds and a co-hydrolyzate of an organosilicon compound containing a UV-absorbing organooxysilane and a fine particle silicon oxide, and
third layer in contact with the second layer, which is a layer prepared by curing an organopolysiloxane composition containing a curing catalyst in the form of a methylammonium compound having a curing activity higher than the catalyst of the second layer, and a co-hydrolyzate of an organosilicon compound containing a UV-absorbing organooxysilane and a fine particle silicon oxide.

### (1) Silicone hard coating layer

Next, the organopolysiloxane compositions used for the silicone hard coating layer of the second and the third layers of the present invention are described in detail. The second and the third layers are coatings formed from the organopolysiloxane compositions each containing the following (i) to (iv). Of the (i) to (iv), (i) to (iii) are common for both second and third layers while (iv) is different.

The components (i) to (iv) are:
(i)
   (A) at least one hydrolysable silicon compound represented by the following formula (1):

      R'ₐSi(OR")₍₄₋ₐ₎ (1)

      wherein R' is independently an organic group containing 1 to 18 carbon atoms, R" is independently an organic group containing 1 to 6 carbon atoms, and a is an integer of 0 ≤ a ≤ 2; and
   (B) a reactive UV-absorbing agent which is a benzophenone having an alkoxysilyl group;
(ii) a fine particle silicon dioxide;
(iii) a siloxane resin having a weight average molecular weight of at least 2,000 which is solid at a temperature of up to 40°C and which is represented by the following average compositional formula (2):

   R"'_{b}Si(OR"")_{c}(OH)_{d}O_{(4-b-c-d)/2} (2)

   wherein R"' is independently an organic group containing 1 to 18 carbon atoms, R"" is independently an organic group containing 1 to 4 carbon atoms, b, c and d are numbers satisfying 0.8 ≤ b ≤ 1.5, 0 ≤ c ≤ 0.3, 0.001 ≤ d ≤ 0.5, and 0.801 ≤ b+c+d < 2; and
(iv) a curing catalyst.

The organopolysiloxane composition is preferably prepared from the components (i) to (iv) by blending the components (iii) and (iv) with co-hydrolyzate (partial hydrolyzate) or co-condensation hydrolyzate (partial condensation hydrolyzate) of the components (i)(A) and (ii) in the presence of (i)(B).

Next, components of the present invention are described in detail.

### 1) Component (i) (A)

The component (A) of the organopolysiloxane of the present invention is at least one hydrolysable silicon compound represented by the following formula (1):

R'ₐSi(OR")₍₄₋ₐ₎ (1)

wherein R' is an organic group containing 1 to 18 carbon atoms, R" is independently an organic group containing 1 to 6 carbon atoms, and a is an integer of 0 ≤ a ≤ 2.

More specifically, R' is an organic group containing 1 to 18 carbon atoms, and in particular, a substituted or unsubstituted monovalent hydrocarbon group containing 1 to 10 carbon atoms. Exemplary such monovalent hydrocarbon groups include straight chain, branched, or cyclic alkyl groups such as methyl group, ethyl group, propyl group, butyl group, hexyl group, decyl group, cyclohexyl group, and 1,1,2-trimethylpropyl group, aryl groups such as phenyl group and tolyl group, aralkyl groups such as benzyl group and phenylethyl group, and alkenyl groups such as vinyl group, allyl group, propenyl group, and butenyl group. Of these, alkyl groups are preferred for use in the application where scratch resistance and weatherability are required, with methyl being the most preferred.

The (OR") group is a hydrolyzable group such as a hydrolyzable group containing 1 to 6 carbon atoms. Exemplary such hydrolyzable groups include organoxy groups such as methoxy group, ethoxy group, propoxy group, butoxy group, isopropenoxy group, and phenoxy group. Of these, the preferred are alkoxy groups containing 1 to 4 carbon atoms in view of process amenability and ease of removal by distillation of the by-products, and the most preferred are methoxy group and ethoxy group. In view of the hardness, abrasion resistance, and adhesion of the hard top composition, the hydrolyzable silicon compound (A) preferably comprises at least 40% by mole, and in particular, at least 50% by mole of a trifunctional hydrolyzable silane (the silane of formula (1) wherein a = 1).

Examples of the silicon compound include methyltrimethoxysilane, methyltriethoxysilane, methyltriisopropoxysilane, methyltributoxysilane, ethyltrimethoxysilane, ethyltriethoxysilane, propyltrimethoxysilane, propyltriethoxysilane, butyltrimethoxysilane, phenyltrimethoxysilane, and cyclohexyltrimethoxysilane.

When the silicon compound is co-hydrolyzed with the fine particle silicon dioxide as describe later, there is no particular upper limit for the amount of water used. The water, however, is typically used at an amount of up to 10 mole, and in particular, up to 5 moles per mole of the silicon compound, and also, at an amount of at least 1.0% by mole, and in particular, at least 1.2% by mole.

The water used for the hydrolysis may preferably have a polar organic solvent added. Exemplary such polar solvents include alcohols such as methanol, ethanol, propanol, isopropanol, butanol, isobutanol, t-butanol, and diacetone alcohol, ethylene glycol, monoethylene glycol monoether, propylene glycol, and propylene glycol monoether.

Preferably, the component (A) is prepared as a hydrolyzate by adding the UV absorbing derivative having an alkoxy silyl group of the component (B) as described below to the hydrolyzable silicon compound which is a precursor for the component (A). This means that the component (A) is co-hydrolyzed in the co-presence of the component (B).

### 2) Component (B)

Component (B) is a reactive UV-absorbing agent which is a benzophenone derivative containing an alkoxysilyl group, and in particular, a benzophenone derivative having at least two alkoxysilyl groups represented by the general formula (I) :

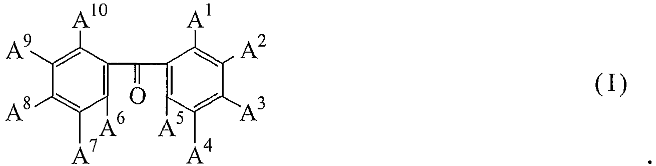

The reactive UV-absorbing agent may be prepared by reacting a benzophenone compound having at least two hydroxy groups (III) represented by the following formula (III): 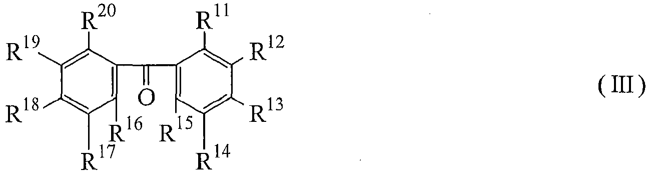 with an allyl compound (IV) represented by the following formula (IV): 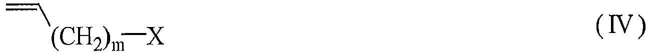 to synthesize a benzophenone containing an allyl group, and further reacting with an alkoxysilane having hydro group (V) represented by the following formula (V):

H-SiR²¹ₙ(OR²²)₃₋ₙ (V)

in the presence of a platinum catalyst.

In the general formula (I), A¹ to A¹⁰ are independently hydrogen, hydroxy group, an alkyl group containing 1 to 5 carbon atoms, or a group represented by the general formula (II) :

-O-(CH₂)ₘ₊₂-SiR²¹ₙ(OR²²)₃₋ₙ (II),

at least two of A¹ to A¹⁰ being the group of the formula (II). In the formula (II), R²¹ and R²² are independently an alkyl groups containing 1 to 5 carbon atoms, m is a positive number of 1 to 5, and n is an integer of at least 0 to up to 2.

In the general formula (III), R¹¹ to R²⁰ are independently hydrogen, an alkyl group containing 1 to 5 carbon atoms, or hydroxy group, at least two of R¹¹ to R²⁰ being hydroxy group. In the general formula (IV), X is a halogen atom such as iodine atom, bromine atom, or chlorine atom, and m is a positive number of 1 to 5.

In the general formula (V), R²¹ and R²² are independently an alkyl group containing 1 to 5 carbon atoms, m is a positive number of up to 5, and n is an integer of at least 0 and up to 2.

The benzophenone compound having at least two hydroxy groups represented by the general formula (III) which is a starting material of the present invention may be readily prepared as a polyhydroxybenzophenone by reacting a phenol having at least two hydroxy groups with an aromatic carboxylic acid. See, for example, JP-A H05-70397.

Examples of such benzophenone include 4,4'-dihydroxybenzophenone, 2,4-dihydroxybenzophenone, 2,3,4-trihydroxybenzophenone, 2,4,4'-trihydroxybenzophenone, 2,2',4-trihydroxybenzophenone, 2,2',3,4-tetrahydroxybenzophenone, 2,3,4,4'-tetrahydroxybenzophenone, 2,2',4,4'-tetrahydroxybenzophenone, 2,2',3,4,4'-pentahydroxybenzophenone, 2,3-dihydroxy-4-methoxybenzophenone, 2,2'-dihydroxy-4-methoxybenzophenone, 2,4-dihydroxy-4'-methoxybenzophenone, 2,2'-dihydroxy-3,4-dimethoxybenzophenone, 2,3-dihydroxy-4,4'-dimethoxybenzophenone, 2,2'-dihydroxy-4,4'-dimethoxybenzophenone, 4-methoxy-2,2',4'-trihydroxybenzophenone, 4-methoxy-2',3',4'-trihydroxybenzophenone, 4-butoxy-2,2',4'-trihydroxybenzophenone, and 3,4-dimethoxy-2,2',4'-trihydroxybenzophenone.

The compound represented by the general formula (I) used in the present invention may be prepared by reacting this polyhydroxybenzophenone with a halogen having an allyl group.

More specifically, the compound represented by the general formula (I) may be synthesized by reacting the compound represented by the general formula (III) and the compound represented by the general formula (VI) such as allyl chloride, ally bromide, or allyl iodide in an inert solvent such as a ketone, ester, or ether in the presence of a base such as an alkali metal hydroxide, alkaline earth metal hydroxide, alkali metal alkoxide, alkaline earth metal alkoxide, alkali metal carbonate, alkaline earth metal carbonate, or amine. The reaction may be carried out at room temperature to about 200°C, and preferably at 50 to 150°C. The reaction is completed typically in 30 minutes to about 10 hours when the reaction is conducted at a temperature of about 120°C.

The compound represented by the general formula (I) may be reacted with the thus obtained compound and the hydrosilane compound represented by the general formula (V) in the presence of a platinum catalyst, optionally in an inert solvent such as toluene or tetrahydrofuran, or in a solventless reaction system to thereby synthesize the compound represented by the general formula (I).

The hydrosilane compound used may be a hydrosilane compound represented by formula (V) having 1 to 3 methoxy, ethoxy, propoxy, butoxy or pentoxy groups. The preferred are trimethoxysilane and triethoxysilane.

The reaction may be carried out at room temperature to about 200°C and preferably at 25 to about 100°C. When trimethoxysilane is used, the reaction may be completed in about 30 minutes to about 2 hours when the reaction temperature is conducted by heating to room temperature to about 60°C. The reaction product is the one represented by the general formula (I).

The silylated UV-absorbing agent used in the present invention is
polyhydroxy-poly(trialkoxysilylalkoxy)benzophenone or poly(trialkoxysilylalkoxy)benzophenone, which may be prepared, for example, as described below.

First, an allyl halide and potassium carbonate are reacted with a polyhydroxybenzophenone in an organic solvent to form a polyhydroxy-polyallyloxybenzophenone or polyallyloxybenzophenone.

The resulting benzophenone is reacted with a hydroalkoxysilane in the presence of a platinum catalyst to form a polyhydroxy-poly(alkoxysilylalkoxy)benzophenone or a poly(alkoxysilylalkoxy)benzophenone. At this point, all hydroxy groups may be converted to allyl groups and then to alkoxysilylalkoxy groups, or some hydroxy groups may be left without undergoing the reaction. Since the benzophenone compound with the remaining hydroxy groups tends to have significant absorption properties in the UV-A region and hence, high UV absorption ability, while such benzophenone compound is susceptible to yellowing as a result of the absorption wavelength region being broadened to the visible region, and also susceptible to gelation through potential reaction with an alkoxysilyl group to attain a molecular weight buildup. Accordingly, the remaining hydroxy groups is preferably less than or equal to 2 moles per molecule. This drawback can be eliminated by silylating the hydroxy groups.

Although the amount of hydroalkoxysilane used may be 1 to 1.2 moles per mole of the allyloxy group when polyallyloxybenzophenone is used, the amount of the hydroalkoxysilane used should be at least 1.1 moles, desirably at least 1.2 moles per mole of the allyloxy group when polyhydroxy-polyallyloxybenzophenone is used, since some hydroxy groups are converted to alkoxysiloxy group. The maximum amount is the total moles of the allyloxy and the hydroxy groups. The phenomenon of gelation due to increase in the molecular weight may be prevented by converting some hydroxy groups into alkoxysiloxy groups.

The reactive UV-absorbing agent of the present invention has a benzophenone structure in the molecule, which contributes for the UV absorption. It also has an alkoxy group at the end of the molecule, and this alkoxy group undergoes hydrolysis to form a highly reactive silanol, which in turn, undergoes polycondensation to form the polymer by itself or to bond with other binder components. This curable UV-absorbing agent may also exist in the form of an oligomer which is generated from hydrolysis of some alkoxysilyl groups and polycondensation of the resulting silanol.

Amount of the component (B) is preferably 0.5 to 60% by weight, and more preferably 1 to 40% by weight in relation to the total of the component (A) and the component (B). Excessively low content of the component (B) may result in the insufficient UV absorption while excessively high content may result in the reduced hardness of the coating.

### 3) Component (ii)

Component (ii) is fine particle silicon dioxide. This component is believed to play the role of a filler which imparts hardness and abrasion resistance to the coating as well as the role of a crosslinker which forms bonds with silanol groups in the component (i) as the binder on the particle surfaces. More specifically, hydroxy groups (Si-OH) are present on the surfaces of particles, and such hydroxy groups can form bond (Si-O-Si) with components (A) and (B). The fine particle silicon dioxide is preferably used as a dispersion in a dispersing medium (oxide sol), typically in the form of a colloidal dispersion of silicon oxide, that is, colloidal silica. The dispersing medium is preferably a polar solvent such as water or an alcohol.

The fine particle silicon dioxide used may have any particle size as long as transparency of the coating is maintained. However, the particle size is preferably in the range of 1 to 300 nm, and more preferably 1 to 100 nm. The silicon dioxide particles may be partially treated and coated with a silane coupling agent, a tetraalkoxysilane such as tetraethoxysilane, a titanium coupling agent, or a carboxyl-containing organic polymer for the purpose of improving dispersion stability of the particles. However, the main component is inorganic silicon dioxide, and content of the organic material added for the purpose of stabilization and coating is preferably up to 10% by weight.

Preferably, 5 to 300 parts by weight, and more preferably, 5 to 100 parts by weight of the component (ii) is used in relation to 100 parts by weight of the hydrolysable silicon compound as described above.

Preferably, the components (i) and (ii) are prepared by adding an aqueous dispersion of the silicon dioxide (the component (ii)) to the hydrolyzable silicon compound which is a precursor for the components (i). This means that a hydrolyzable silicon compound is prepared in the co-presence of the component (ii). This process is efficient when an acidic or alkaline aqueous silicon dioxide sol is used, and in the present invention, use of an acidic aquous silicon dioxide sol is preferable. When this process is employed, water in the aqueous silicon dioxide sol is preferably at least 1 mole, and more preferably at least 1.2 moles in relation to 1 mole of the hydrolyzable group OR". When the water is less than 1 mole, hydrolyzable groups will be left unhydrolyzed as described above, leading to decrease in the crosslinking density and detracting from hardness and adhesion. Upper limit in the amount of the water is not critical while the amount of the water is usually up to 10 moles, and typically up to 5 moles.

The co-hydrolysis may be promoted by using a hydrolytic catalyst. The hydrolytic catalyst used herein may be selected from those known in the art including acidic hydrogen halides, carboxylic acids, sulfonic acids, acidic or weakly acidic oxides and inorganic salts, and solid acids such as ion exchange resins, and the preferred are organic acids such as acetic acid and maleic acid, and cation exchange resins having sulfonic acid groups or carboxylic acid groups on their surfaces. The hydrolytic catalyst is preferably used at an amount of 0.001 to 10 mol% per mole of the hydrolyzable group (OR"), and the hydrolysis is preferably carried out under weakly acidic conditions, typically at a pH in the range of 2 to 7. If the hydrolysis is not conducted under such weakly acidic conditions, the resulting silanol groups may remain unstable, allowing condensation to proceed to invite an increase in the molecular weight.

To provide the top coating having an improved hardness, the hydrolysis as described above must be followed by condensation. The condensation may be carried out subsequent to the hydrolysis in a continuous manner, typically at room temperature or by heating to a temperature of up to 100°C. A temperature above 100°C may cause gelation. The condensation may be promoted by distilling off the alcohol resulting from the hydrolysis at a temperature of 80°C or higher and at atmospheric or subatmospheric pressure. Furthermore, a condensation catalyst such as a basic compound, an acidic compound, or a metal chelate may be added for promoting the condensation. Prior to or during the condensation step, an organic solvent may be added to regulate the progress of the condensation or the concentration. Also, a dispersion of metal oxide particles in water or an organic solvent, for example, silicon dioxide sol may be added. A silicone resin generally builds up its molecular weight and loses its solubility in water or the alcohol formed with the progress of the condensation, and accordingly, the organic solvent added is preferably an organic solvent having a relatively high polarity with a boiling point of at least 80°C in which the product is fully soluble. Examples of such organic solvent include alcohols such as isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as propyl acetate, butyl acetate, and cyclohexyl acetate.

The silicone product resulting from the condensation preferably has a weight average molecular weight of at least 1,500, more preferably 1,500 to 50,000, and even more preferably 2,000 to 20,000, as measured by GPC versus polystyrene standards. A silicone product with the weight average molecular weight below such range may form a coating which is less tough and prone to crack whereas a silicone product with the weight average molecular weight beyond such range tends suffer from reduced hardness and whitening problem of the coating due to the phase separation of the resin in the coating.

### 4) Component (iii)

Component (iii) is a siloxane resin represented by the following average compositional formula (2):

R"'_{b}Sᵢ(OR"")_{c}(OH)_{d}O_{(4-b-c-d)/2} (2)

wherein R"' is independently an organic group containing 1 to 18 carbon atoms, R"" is independently an organic group containing 1 to 4 carbon atoms, b, c and d are numbers satisfying 0.8 ≤ b ≤ 1.5, 0 ≤ c ≤ 0.3, 0.001 ≤ d ≤ 0.5, and 0.801 ≤ b+c+d < 2. The siloxane resin is a component which imparts flexibility to the hard topcoat to prevent cracks and the like while maintaining the high hardness of the film.

This effect is realized since the siloxane resin of the component (iii) has a relatively small amount of terminal groups (OR"' and OH) and participates in the crosslinking reaction of the hard topcoat composition to a limited extent, and accordingly, plays the role of a buffer which fills the interstices of crosslinking network.

R"' is independently an organic group containing 1 to 18 carbon atoms, and preferably 1 to 10 carbon atoms. Examples include a substituted or unsubstituted monovalent hydrocarbon groups such as alkyl groups, aryl groups, aralkyl groups, alkenyl groups, and halo-substituted alkyl groups, and the preferred are alkyl and aryl groups. Exemplary such groups include methyl group, ethyl group, propyl group, butyl group, hexyl group, octyl group, decyl group, cyclopentyl group, cyclohexyl group, phenyl group, vinyl group, and trifluoropropyl group.

R"" is independently an organic group containing 1 to 4 carbon atoms, and typically an alkyl group or an alkenyl group. (OR"") represents the moiety of the terminal group on the siloxane resin other than the silanol group (Si-OH). Examples include methoxy group, ethoxy group, propoxy group, and butoxy group, and the preferred are methoxy group and ethoxy group in view of the availability of the reactants.

Letters b, c and d are numbers satisfying 0.8 ≤ b ≤ 1.5, 0 ≤ c ≤ 0.3, 0.001 ≤ d ≤ 0.5, and 0.801 ≤ b+c+d < 2. When b indicating the content of R"' is less than 0.8, crack resistance will be poor. On the other hand, b in excess of 1.5 results in high hydrophobicity due to increase of the organic groups, and hence, in the reduced compatibility with the hard topcoat layer, and this may lead to bleed out from the coating and loss of crack resisting effects, and also, appearance failures such as cissing. When c indicating the content of OR"" exceeds 0.3, namely, with the increase in the amount of the terminal groups, the component will participates in the condensation reaction with the components (i) and (ii) at a higher degree, detracting from the crack-preventing effect. The content of alkoxy and other groups can be quantitatively determined by infrared absorption spectroscopy (IR), the alcohol determination method based on alkali cracking, or the like.

When d indicating the content of OH exceeds 0.5, the resin will participate at a higher degree in the condensation reaction with the components (i) and (ii) in the heat curing, and this will result in the increased hardness and a lack of crack resistance. If d is less than 0.001, the resin will not at all form bonds with components (i) and (ii) and will not be fixed within the film, and this will result in the reduced hardness and solvent resistance. More preferably, b, c and d are in the range satisfying 0.9 ≤ b ≤ 1.3, 0.001 ≤ c ≤ 0.2, 0.01 ≤ d ≤ 0.3, and 0.911 ≤ b+c+d ≤ 1.8. These values of b, c, and d can be determined by analyzing the resin by ²⁹Si-NMR and calculating the average chemical structure for the resin. The chemical structure may be represented by a combination of Q units (SiO_{4/2}) derived from a tetrafunctional silane, T units (R"'SiO_{3/2}) derived from a trifunctional silane, D unit (R"'₂SiO_{2/2}) derived from a difunctional silane, and M unit (R"'₃SiO_{1/2}) derived from a monofunctional silane. When the component (iii) of the present invention is represented by this representation system, the molar content of the T units represented by R"'SiO_{3/2} is preferably at least 70% by mole based on the total moles of all siloxane units. When component (iii) is represented by this system, proportion in mole of T units (R"'SiO_{3/2}) is preferably at least 70% by mole based on the total moles of all siloxane units. Content of the T unit of less than 70% by mole may result in the failure of overall balance of the hardness, the abrasion resistance, the adhesion, the coatability, and the appearance. The balance may consist of M, D and Q units, and the sum of these units is preferably up to 30% by mole.

The siloxane resin of the component (iii) is solid at a temperature of up to 40°C. When the siloxane resin is liquid at 40°C or below, the coating will be insufficient in hardness and solvent resistance even if bonds are formed between the siloxane resin of the component (iii) and the components (i) and (ii) by the heat curing. The siloxane resin of the component (iii) may preferably have a volatile content of up to 2% by weight after drying at 105°C for 3 hours. The volatile content in excess of 2% by weight may invite flowing or fusing of the solid resin at a temperature of up to 40°C, which is inconvenient for processing. Preferably, the siloxane resin has a softening point of 60 to 90°C. When the softening point is lower than 60°C, the hard topcoat coating may be insufficient in hardness and abrasion resistance while the softening point exceeding 90°C may result in the insufficient compatibility with the components (i) and (ii) and poor crack resistance. The softening point is the value measured by the ring-and-ball test according to JIS K-2207.

The molecular weight of a siloxane resin may be measured by GPC (gel permeation chromatography). The siloxane resin of the present invention has a weight average molecular weight of at least 2,000, and preferably 2,000 to 10,000 as measured by GPC versus polystyrene standards. The siloxane resin with a molecular weight of less than 2,000 may undergo crosslinking due to excessive terminal groups, detracting from the crack-preventing effect. An excessively high molecular weight may invite loss of compatibility with the components (i) and (ii) and loss of transparency.

Preparation of the siloxane resin of the component (iii) may be accomplished by a method known in the art for producing the resin. In this method, a polymer is prepared by adding water to at least one hydrolyzable silane compound or this compound in admixture with an organic solvent, stirring the mixture to thereby contact the hydrolyzable silane compound with the water for hydrolysis, reacting silanol groups resulting from the hydrolysis with each other, or with another hydrolyzable group, to form a siloxane bond (-Si-O-Si-) to thereby complete the polycondensation. After the polymerization, the reaction mixture is neutralized, and the organic solvent is finally removed by distillation to yield a siloxane resin in solid form. Unlike the solvent-insoluble gel, this solid resin can be dissolved in an organic solvent again. The method favorable for preparing the siloxane resin to be used as the component (iii) is the method wherein the hydrolysis is conducted under strongly acidic conditions, for example, at pH 2 or below. Under such strongly acidic conditions, the silanol groups contributing for the polycondensation are unstable compared the case of weakly acidic conditions, and reaction rapidly proceeds in turn to form a compound having a higher molecular weight.

Amount of the water appropriate for use in the hydrolysis may vary by the type of the hydrolyzable group of the silane used as the reactant. When the reactant used is an alkoxysilane, the water used is preferably less than 1.5 mole, and more preferably 0.6 to 1.0 mole per mole of the hydrolyzable group. If amount of the water for the hydrolysis is 1.5 moles or more during the polycondensation reaction under highly acidic conditions, rapid condensation takes place in a three-dimensional manner, undesirably leading to gelation. When the reactant is a chlorosilane, amount of the water for the hydrolysis is not particularly limited.

The hydrolysis may be conducted by using an organic solvent, and the organic solvent is preferably a nonpolar solvent which is less miscible with water, for example, hydrocarbon solvents such as toluene, xylene, and hexane. When the organic solvent is extremely immiscible with water, hydrolysis may be retarded, and in such a case, a polar solvent such as an alcohol may be used along with other organic solvents.

The hydrolyzable silane compound used as the precursor may be the same as the compound of formula (1) or a corresponding chlorosilane. Preferable silane compounds include vinyltrichlorosilane, vinyltrimethoxysilane, vinyltriethoxysilane, vinylmethyldichlorosilane, vinylmethyldimethoxysilane, vinylmethyldiethoxysilane, tetrachlorosilane, tetramethoxysilane, tetraethoxysilane, methyltrichlorosilane, methyltrimethoxysilane, methyldimethoxysilane, methyltriethoxysilane, methyltriisopropoxysilane, propyltrichlorosilane, propyltrimethoxysilane, propyltriethoxysilane, hexyltrichlorosilane, hexyltrimethoxysilane, phenyltrichlorosilane, phenyltrimethoxysilane, and diphenyldimethoxysilane. Of these, methyltrimethoxysilane, dimethyldimethoxysilane, methyltriethoxysilane, dimethyldiethoxysilane, and phenyltrimethoxysilane are the preferred.

Amount of the component (iii) is preferably 3 to 100 parts, and more preferably 3 to 80 parts by weight per 100 parts by weight of the total of the components (i) and (ii). Less then 3 parts by weight of component (iii) may result in the failure of realizing the crack-preventing effect whereas amount in excess of 100 parts by weight of may lead to a hard topcoat film having an extremely low hardness and abrasion resistance.

When the siloxane resin of the component (iii) is incorporated, a solution of the siloxane resin in an organic solvent may be preliminarily prepared and then mixed with other components because heating is often necessary when the siloxane resin is dissolved in the solvent. Preferable non-limiting examples of the organic solvent include ethanol, isopropanol, isobutanol, propylene glycol monoalkyl ethers, and diacetone alcohol.

### 5) Component (iv)

The component (iv) is a curing catalyst for promoting condensation of condensable groups such as silanol group and alkoxy group. Any curing catalyst commonly used in the art may be used, and examples include alkali metal salts such as potassium formate, sodium acetate, and potassium propionate; amine carboxylates such as ammonium acetate, dimethylamine acetate, ethanolamine acetate, and dimethylaniline formate; amines such as triethylamine, triethylenediamine, benzyl trimethylamine, pyridine, and γ-aminopropyltrimethoxysilane; alkaline metal hydroxides or alkoxides such as sodium hydroxide and sodium methoxide; modified (latent) amine such as dicyanide diamide, 2-methylimidazole, and 2-phenylimidazole; organic acids such as acetic acid, citric acid, maleic acid, phthalic acid, terephthalic acid, and pyromellitic acid or their acid anhydrides; inorganic acids such as hydrochloric acid, nitric acid, sulfuric acid, methanesulfonic acid, toluenesulfonic acid, phosphotungstic acid, and phosphomolybdic acid; and metallic compounds such as aluminum triisopropoxide, titanium tetrabutoxide, triacetyl acetone aluminum, dioctyltin dilaulate, and zinc octylate.

In the present invention, the preferred are basic compounds, and in particular, ammonium compounds in view of regulating the curability of the second and third layers.

The curing catalyst incorporated in the organopolysiloxane composition for forming the silicone hard coating promotes condensation of the silanol groups and alkoxysilyl groups in the silicon compound to promote hardening by curing so that the hard coating layer enjoy sufficient hardness and adhesion with the substrate, and the curing catalyst preferably comprises a combination of a basic curing agent and an acidic regulating agent. The basic curing agent is preferably an organic ammonium compound which promotes the condensation and curing by crosslinking. However its use with an acidic regulating agent is preferable since the organic ammonium compound used alone has the risk of undergoing gelation during the storage. The acidic regulating agent is preferably an organic acid having weak acidity so that it regulates condensation of the silanol group and alkoxy silyl group during the storage to facilitate adequate formation of the cured coating.

The ammonium compound is preferably an organic ammonium compound represented by the following general formula (3):

[(R¹) (R²) (R³) (R⁴) N] ⁺ X⁻ (3)

wherein R¹, R², R³, and R⁴ are independently hydrogen atom or an alkyl group or a halogenated alkyl group containing 1 to 18 carbon atoms, at least one of which being methyl group, and X⁻ is a hydroxide anion or an organic carboxylate anion.

For the R¹, R², R³, and R⁴ in the formula, examples of the optionally halogenated alkyl group containing 1 to 18 carbon atoms, and preferably 1 to 12 carbon atoms include straight chain, branched, or cyclic alkyl groups such as methyl group, ethyl group, propyl group, butyl group, pentyl group, hexyl group, heptyl group, octyl group, cyclopentyl group, and cyclohexyl group; and halogenated alkyl groups such as chloromethyl group, γ-chloropropyl group, and 3,3,3-trifluoropropyl group. Exemplary organocarboxylate anions include formate anion, acetate anion, propionate anion, butyrate anion, valerate anion, and caproate anion.

Examples of such component include hydroxides such as tetramethylammonium hydroxide, tetraethylammonium hydroxide, tetran-propylammonium hydroxide, tetran-butylammonium hydroxide, tetran-pentylammonium hydroxide, tetran-hexylammonium hydroxide, tetracyclohexylammonium hydroxide, tetrakis(trifluoromethyl)ammonium hydroxide, trimethylcyclohexylammonium hydroxide, trimethyl(trifluoromethyl)ammonium hydroxide, and trimethylt-butylammonium hydroxide, salts of such hydroxide with a carboxylic acid.

The curing catalyst is different in the second silicone hard coating layer of the third silicone hard coating layer, and the activity of the curing catalyst in the third layer should be higher than the curing catalyst of the second layer. The curing system having a weak curing ability may be prepared by combining a catalyst having a weak curing ability and a regulator agent having a strong curing ability, or by combining a small amount of catalyst with a large amount of the regulator agent, whereas the curing system having a strong curing ability may be prepared by combining a catalyst having a strong curing ability and a regulator agent having a weak curing ability, or by combining a large amount of catalyst with a small amount of the regulator agent.

The catalyst having a weak curing activity is an alkylammonium compound other than methylammonium compounds while the catalyst having a strong curing activity is a methylammonium compound.

The regulator agent having a weak regulating activity may be a carboxylic acid compound having a high molecular weight while the regulator agent having a strong regulating activity may be a carboxylic acid compound having a low molecular weight. Use of a weak acid such as formic acid, acetic acid, propionic acid, oxalic acid, lactic acid, citric acid, succinic acid, malonic acid, tartaric acid, and butyric acid having buffer function is preferable.

Furthermore, a salt prepared by an acid-base reaction between a basic curing agent and acidic regulator agent may also be used. More specifically, the curing catalyst of the second layer may be a tetraalkylammonium hydroxide or a tetraalkylammonium acetate wherein the alkyl group is a group other than methyl group, and the curing catalyst of the third layer may be tetramethylammonium hydroxide, tetramethylammonium acetate, or tetramethylammonium formate. These catalysts may be used alone or in combination of two or more.

Amount of the component (iv) is not particularly limited as long as the amount is effective for the curing components (i) to (iii). More specifically, the component (iv) is preferably incorporated at 0.0001 to 30% by weight, and more preferably at 0.001 to 10% by weight in relation to the solid content of the components (i) to (iii). The curing, and hence, hardness may be insufficient when the content is less than 0.0001% by weight, while content in excess of 30% by weight may invite increased risk of crack generation in the coating or loss of water resistance.

Ratio of the curing agent and the regulator agent is preferably 0.5 to up to 10 moles, and more preferably 0.9 to up to 3 moles of the regulator agent per mole of the curing agent. When the ratio of the regulator agent is less than 0.5 to 1 of the curing agent, there is a risk that the crosslinking may start during storage of the coating solution and the gelated coating solution will no longer be usable. When the ratio of regulator agent is in excess of 10, there is a risk that the curing of the coating is extremely retarded and sufficient hardness may not be accomplished.

In addition to the components as described above, an organic solvent may also be incorporated.

The organic solvent is not particularly limited as long as it is capable of dissolving the components (i) to (iv). Preferably, the solvent mainly comprises a highly polar organic solvent. Exemplary solvents include alcohols such as methanol, ethanol, isopropyl alcohol, n-butanol, isobutanol, t-butanol, and diacetone alcohol; ketones such as methyl propyl ketone, diethyl ketone, methyl isobutyl ketone, and cyclohexanone; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as ethyl acetate, propyl acetate, butyl acetate, and cyclohexyl acetate, which may be used alone or in combination of two or more.

The solvent is preferably added so that the organopolysiloxane composition of the present invention has a solid concentration of 1 to 30% by weight, and more preferably 5 to 25% by weight. Outside the range, the coating obtained by applying and curing the composition may be defective. A concentration below such range may lead to a coating which suffers from sagging, wrinkling or mottling, and hence, failure to provide the desired hardness and scratch resistance. A concentration beyond such range may lead to a coating which may suffer from brushing, whitening, or cracking.

### (2) Primer layer

Next, the composition used for the primer layer which is the first layer of the present invention is described in detail.

The critical components of the primer composition (coating composition) of the present invention are the UV-absorbing vinyl copolymer formed from the following components (a) to (c) and fine particle silicon dioxide.

The vinyl copolymer is formed from (a) a UV-absorbing vinyl monomer, (b) an alkoxysilyl-containing vinyl monomer, and (c) a vinyl monomer other than (a) and (b). More specifically, the vinyl copolymer is a vinyl resin obtained by copolymerizing 1 to 30% by weight of (a), 1 to 30% by weight of (b), and 40 to 98% by weight of (c).

The UV-absorbing vinyl monomer (a) may be any monomer having at least one UV-absorbing group and at least one vinyl group in the molecule. Examples of the UV-absorbing vinyl monomer (a) include benzotriazole compounds represented by the following general formula (4): 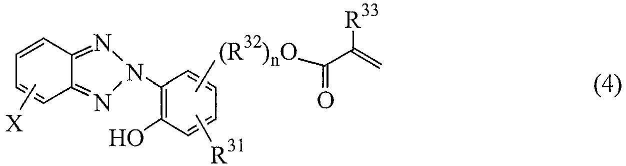 wherein X is hydrogen or chlorine, R³¹ is hydrogen, methyl group, or a tertiary alkyl group containing 4 to 8 carbon atoms, R³² is a straight chain or branched alkylene group containing 2 to 10 carbon atoms, R³³ is hydrogen atom or methyl group, and n is 0 or 1, and benzophenone compounds represented by the following general formula (5): 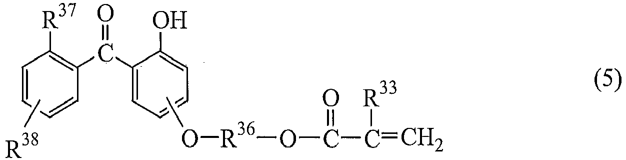 wherein R³³ is as defined above, R³⁶ is a substituted or unsubstituted straight chain or branched alkylene group containing 2 to 10 carbon atoms, R³⁷ is hydrogen atom or hydroxy group, R³⁸ is hydrogen atom, hydroxy group, or an alkoxy group containing 1 to 6 carbon atoms.

Examples of the benzotriazole compound represented by the general formula (4) include
2-(2'-hydroxy-5'-(meth)acryloxyphenyl)-2H-benzotriazole, 2-(2'-hydroxy-3'-tert-butyl-5'-(meth)acryloxymethylphenyl)-2H-benzotriazole,
2-[2'-hydroxy-5'-(2-(meth)acryloxyethyl)phenyl]-2H-benzotriazole,
2-[2'-hydroxy-3'-tert-butyl-5'-(2-(meth)acryloxyethyl)-phenyl]-5-chloro-2H-benzotriazole, and
2-[2'-hydroxy-3'-methyl-5'-(8-(meth)acryloxyoctyl)phenyl]-2H-benzotriazole.

Examples of the benzophenone compound represented by the general of formula (5) include 2-hydroxy-4-(2-(meth)acryloxyethoxy)benzophenone, 2-hydroxy-4-(4-(meth)acryloxybutoxy)benzophenone, 2,2'-dihydroxy-4-(2-(meth)acryloxyethoxy)benzophenone, 2,4-dihydroxy-4'-(2-(meth)acryloxyethoxy)benzophenone, 2,2',4-trihydroxy-4'-(2-(meth)acryloxyethoxy)benzophenone, 2-hydroxy-4-(3-(meth)acryloxy-2-hydroxypropoxy)benzophenone, and 2-hydroxy-4-(3-(meth)acryloxy-1-hydroxypropoxy)-benzophenone.

The preferable UV-absorbing vinyl monomers are benzotriazole compounds represented by the formula (4), and the most preferred is 2-[2'-hydroxy-5'-(2-(meth)acryloxy-ethyl)phenyl]-2H-benzotriazole.

The vinyl monomer of the component (b) is a compound having an alkoxysilyl group and a vinyl-containing monovalent hydrocarbon group. The vinyl-containing monovalent hydrocarbon group is preferably vinyl, allyl, 3-acryloxypropyl, 3-methacryloxypropyl, or p-vinylphenyl in view of availability of the precursors and ease of synthesis. Suitable alkoxysilyl groups include trialkoxyl, dialkoxyl, and monoalkoxyl groups. Desirable vinyl monomers include vinyl monomers having a trialkoxysilyl group. The number m of hydrolyzable groups is an integer of 1, 2 or 3, while inclusion of 2 or 3 hydrolyzable groups is preferable for quick formation of the network structure, with 3 being the most preferred.

Examples of the compound of the component (b) include vinyltrimethoxysilane, vinyltriethoxysilane, vinyltris(ethoxyethoxy)silane, allyltrimethoxysilane, allyltriethoxysilane, allyltris(ethoxyethoxy)silane, 3-acryloxypropyltrimethoxysilane, 3-acryloxypropyltriethoxysilane, 3-acryloxypropyltris(ethoxyethoxy)silane, 3-methacryloxypropyltrimethoxysilane, 3-methacryloxypropyltriethoxysilane, and 3-methacryloxypropyltris(ethoxyethoxy)silane.

Examples of the (c) a vinyl monomer other than (a) and (b) used in the present invention include alkyl (meth)acrylates such as methyl acrylate, methyl methacrylate, ethyl acrylate, ethyl methacrylate, propyl acrylate, propyl methacrylate, butyl acrylate, butyl methacrylate, hexyl acrylate, hexyl methacrylate, 2-ethylhexyl acrylate, and 2-ethylhexyl methacrylate; vinyl aromatic hydrocarbons such as styrene, vinyltoluene, and α-methylstyrene; vinyl halides such as vinyl chloride and vinylidene chloride; conjugated dienes such as butadiene and isoprene; and vinyl esters of a saturated fatty acid containing 1 to 12 carbon atoms such as vinyl acetate and vinyl propionate.

The vinyl copolymer used in the present invention may be prepared by reacting the components (a), (b) and (c) in an organic solvent and in the presence of a free radical initiator at room temperature to the reflux temperature of the solvent, and preferably at 50 to 150°C. The type and amount of the solvent used may be the same as the organic solvent to be described for the topcoat component.

The free radical initiator used may be an azo compound or an organic peroxide. Examples include azobisisobutyronitrile, t-butyl hydroperoxide, cumene hydroperoxide, di-t-butyl peroxde, dicumyl peroxide, benzoyl peroxide, t-butyl perbenzoate, and acetone peroxide. Although the amount of the free radical initiator used is not particularly limited, an appropriate amount is 0.01 to 1% by weight based on the total weight of the components (a), (b) and (c).

In the polymerization process, a chain transfer agent such as n-propane thiol, 1-hexane thiol, 1-decane thiol, benzene thiol, 3-mercaptopropyltrimethoxysilane, or 3-mercaptopropyltriethoxysilane may also be used for controlling the molecular weight.

Contents of the components (a) and (b) in the copolymer is preferably such that the content of the components (a) and (b) is respectively in the range of 1 to 30% by weight in relation to the total weight of the components (a), (b) and (c). A content of the component (a) below such range may lead to reduced UV screening property whereas a content of the component (a) exceeding such range may adversely affect the adhesion between the primer layer and the hard top layer. A content of the component (b) below such range may adversely affect the adhesion between the primer layer and the hard top layer whereas a content of the component (b) exceeding such range may lead to brittleness of the primer layer.

### Other components

Of other components, the one which is critical is a solvent. The solvent used is not particularly limited as long as the copolymer comprising the components (a), (b) and (c) are soluble in the solvent. Preferably, the solvent mainly comprises a highly polar organic solvent. Exemplary organic solvents include alcohols such as methanol, ethanol, isopropyl alcohol, n-butanol, isobutanol, t-butanol, and diacetone alcohol; ketones such as methyl propyl ketone, diethyl ketone, methyl isobutyl ketone, and cyclohexanone; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as ethyl acetate, propyl acetate, butyl acetate, and cyclohexyl acetate, which may be used alone or in combination of two or more.

The solvent is preferably used in such an amount that the silicone coating composition of the present invention may have a solids concentration of 1 to 30% by weight, and more preferably 5 to 25% by weight. When used at an amount outside such range, the coating obtained by applying and curing the composition may have defects. At the concentration below such range, the coating may undergo sagging, wrinkling, or mottling, failing to provide the desired hardness and scratch resistance. A concentration beyond such range may lead to a coating susceptible to brushing, whitening, or cracking.

Another critical component in the primer layer is fine particle silicon dioxide.

The fine particle silicon dioxide is added in order to reduce the coefficient of linear expansion of the primer layer. The fine particle silicon dioxide may be in the form of a colloidal dispersion of the nano-size silicon dioxide particles in the medium of an organic solvent, and commercially available dispersions in an organic solvent may be used.

The fine particle silicon dioxide is not particularly limited as long as it can be dispersed in an organic solvent and the primer composition (coating composition) having the fine particle silicon dioxide added thereto can be cured into a primer layer having a coefficient of linear expansion of up to 150×10⁻⁶/°C. Since the fine particle silicon dioxide has SiOH groups on their surface, siloxane crosslinks are formed between hydrolyzable silyl groups and/or SiOH groups in the vinyl polymer to thereby form an organic/inorganic composite. As a result, the coefficient of linear expansion of the primer layer is reduced to 150×10⁻⁶/°C or below.

Examples of the organic solvent used for the dispersion of the fine particle silicon dioxide include methanol, ethanol, isopropanol, n-butanol, ethylene glycol, ethyl cellosolve, butyl cellosolve, propylene glycol monomethyl ether, propylene glycol monomethyl ether acetate (PGMEA), dimethylformamide, dimethylacetamide, methyl ethyl ketone, methyl isobutyl ketone, and xylene/n-butanol mixture. In view of the solubility of the vinyl polymer, the preferred are ethylene glycol, ethyl cellosolve, butyl cellosolve, propylene glycol monomethyl ether, PGMEA, methyl ethyl ketone, and methyl isobutyl ketone.

The fine particle silicon dioxide preferably has a primary particle size of 1 to 100 nm, and more preferably 2 to 50 nm in view of the dispersibility in the primer composition and transparency in the primer layer. The particle size in excess of 100 nm may result in poor dispersion stability in the composition and significantly reduced transparency of the cured coating.

The fine particle silicon dioxide dispersed in the organic solvent is preferably colloidal silica dispersed in an organic solvent, also referred to as organosilica sol. Examples include silica sol dispersed in ethylene glycol, silica sol dispersed in ethylene glycol/mono-n-propyl ether, silica sol dispersed in ethyl cellosolve, silica sol dispersed in butyl cellosolve, silica sol dispersed in propylene glycol monomethyl ether sol, silica sol dispersed in PGMEA, silica sol dispersed in methyl ethyl ketone, and silica sol dispersed in methyl isobutyl ketone. The fine particle silicon dioxide dispersed in organic solvents may be used alone or in admixture of two or more types.

The colloidal silica dispersion in the organic solvent is commercially available. Exemplary commercial products include those used in Examples 1 to 4 as described below such as PMA-ST, MEK-ST, MIBK-ST, IPA-ST-L, IPA-ST-MS, EG-ST-ZL, DMAC-ST-ZL, and XBA-ST (Nissan Chemical Industries, Ltd.), OSCAL 1132, 1332, 1532, 1722, and EOMST-1003SIV (Catalysts & Chemicals Industries Co., Ltd.).

The vinyl polymer having a hydrolyzable silyl group and/or SiOH group and an organic UV-absorptive group attached to side chains and the fine particle silica dispersed in the organic solvent in the primer composition of the present invention are blended such that 0.1 to 100 parts, and more preferably 1 to 50 parts by weight of the fine particle silica as solid content is present per 100 parts by weight of the vinyl polymer as resin content. When the fine particle silicon dioxide is added in excess of 100 parts by weight, crosslinking density of the coating formed by the primer composition will be excessively high and the resulting coating will have excessively high hardness to adversely affect the adhesion to the substrate or the overlying polysiloxane coating. When the amount of the fine particle silicon dioxide is less than 0.1 parts by weight, crosslinking density of the resulting coating will be low, and the primer coating will not have a coefficient of linear expansion of up to 150×10⁻⁶/°C, failing to provide the desired adhesion and crack resistance.

In another embodiment, the primer composition of the present invention may contain an organic/inorganic composite prepared by reacting the vinyl polymer having a hydrolyzable silyl group and/or SiOH group and an organic UV-absorptive group attached to side chains with the fine particle silicon dioxide dispersed in organic solvent.

Reaction of the vinyl polymer having a hydrolyzable silyl group and/or SiOH group and an organic UV-absorptive group attached to side chains with the fine particle silicon dioxide dispersed in an organic solvent occurs in the presence of water or by heating to 30 to 120°C, and in particular, by heating to 40 to 80°C for 0.5 to 12 hours, and in particular, for 1 to 10 hours. Such reaction may result in the loss of stability of the solution composition. In such a situation, inclusion of a dehydrating agent is desired.

The dehydrating agent used is not particularly limited as long as it reacts with water to consume the water. Typical examples include orthoformic esters, orthoacetic esters, and carbodiimides, among which methyl orthoformate, ethyl orthoformate, and propyl orthoformate are readily available.

In this case, the dehydrating agent may be used at an amount of 0.1 to 100 parts, and more preferably 1 to 50 parts by weight per 100 parts by weight of the resin content in the primer composition. The dehydrating agent should react to consume any externally entrained water.

Inclusion of the dehydrating agent ensures stability of the hydrolyzable silyl groups in the solution, effective bond with the hydrolyzable silyl groups and/or the SiOH groups in the hard top layer after the coating formation, and crosslinking with the hydrolyzable silyl groups and/or the SiOH groups in the vinyl copolymer having a UV-absorbing group attached to a side chain. As a result, the coating becomes dense enough for crack prevention and effective immobilization of the UV-absorbing agent and the like in the coating layer.

The primer composition may contain an organic solvent. The type and amount of the organic solvent used may be the same as those as mentioned above for the organopolysiloxane composition.

The cured coating (resin layer) formed by the present invention on a plastic substrate exerts long-term durability since the UV-absorbing agent in the primer layer comprising the components (a), (b) and (c) effectively functions for preventing the substrate from yellowing and surface degradation, and the silane compound as described with regard to the component (B) exerts UV-absorbing effects for preventing degradation at the interface between the second and third layers and the primer layer of the first layer.

The cured coating of the present invention may be obtained by applying the composition(s) on at least one surface of a substrate directly or via at least one different layer and curing the layer to form a cured film.

The composition constituting each layer may be coated to the substrate by a method commonly used in the art such as brush coating, spray coating, dipping, flow coating, roll coating, curtain coating, spin coating, and knife coating.

The film formation process preferably involves the following steps of coating the primer layer (conventional known primer layer) as the first layer on the substrate, air drying or heating the coating for curing, coating the organopolysiloxane composition of the present invention on the primer layer, and drying at room temperature or heating the coating for curing to form the second and third layers.

The substrate used herein may be selected from molded plastics and composites of plastics with ceramics, glass, or metals. Various plastic materials (organic resin substrates) are advantageously used. Among these, the preferred are polycarbonate, polystyrene, acrylic resins, ABS resins, and vinyl chloride resins, and the most preferred is use of a polycarbonate resin.

The curing of the composition after coating may be accomplished by air drying by leaving in the air or by heating. The curing temperature and time are not particularly limited, and the preferred is heating to a temperature below the heat resistance limit of the substrate for 10 minutes to 2 hours, and more preferably at 80 to 145°C for 30 minutes to 2 hours.

The thickness of each coating is not particularly limited although the thickness is typically 0.01 to 100 µm, and 0.5 to 60 µm. A thickness of 1 to 30 µm is particularly preferable in view of the hardness, scratch resistance, long-term stable adhesion, and crack resistance of the coating. Each composition may be applied as multiple stacked coats by repeating the procedure as described above. In particular, the thickness of the primer layer is preferably in a range of 0.5 to 20 µm for protection of the plastic substrate from UV. When the primer layer is too thin, adhesion to the second layer may be insufficient. When the primer layer is too thick, bubbles or voids may be entrained and this may result in the loss of hardness. When the second and third layers are too thin, hardness may be insufficient, while excessive thickness may result in the cracking.

### EXAMPLES

Next, the present invention is described in further detail by referring to the following Synthetic Examples, Examples, and Comparative Examples, which by means limit the scope of the present invention.

First, materials used for the synthetic examples of the silicone hard coating composition (UV absorbing silane C and plasticity-imparting polysiloxane D), the silicone hard coating composition B (for the second and third layers not containing the curing catalyst), materials for the primer coating composition (primer polymer), and the primer coating composition A (primer for the first layer not containing the curing catalyst) are described.

### 1) Synthesis of materials used for silicone hard coatings

### Synthetic Example 1

### Preparation of UV-absorbing agent (UV-absorbing silane)

4-allyloxy-2-hydroxy-benzophenone (25.4 g, 0.1 mol; manufactured by Aldrich) was suspended in 70 ml of toluene. Two droplets of platinum catalyst (1,3-divinyltetramethyldisiloxane solution of vinylsiloxane-coordinated platinum complex having a platinum metal content 8.5% by weight manufactured by Shin-Etsu Chemical Co., Ltd.) was added to this suspension. Two droplets of platinum catalyst PL50-T (Shin-Etsu Chemical Co., Ltd.) were added to the suspension. The temperature was then elevated to about 65°C, and 29.3 g (0.24 mol) of trimethoxysilane was added to the suspension. The reaction mixture was maintained at a temperature of about 65 to 85°C for about 1 to 2 hours. After cooling the reaction mixture, 5 g of Wakogel C-100 was added for adsorption of the platinum catalyst. Filtration and vacuum stripping of the solvent resulted in 34.8 g of a highly viscous red oily product (0.092 mol).

NMR spectrum of the main product corresponded to the structure of 2-hydroxy-4-trimethoxysilylpropoxybenzophenone. The yield was 92%. This silane is abbreviated as UV-absorbing silane C, and its physical properties are shown in Table 1.

**Table 1**

| Physical properties of UV-absorbing agent | | |
|---|---|---|
| Physical properties of the solution | | UV-absorbing silane C |
| Appearance | | high viscosity oil |
| Content of UV-absorbing group | mmol/g | 2.66 |
| Viscosity | mm²/s | 250 |
| Non-volatile content (%) | 105°C, 3 hours | 99.02 |
| Refractive index | 25°C | 1.5655 |
| Content of alkoxy group | mmol/g | 7.97 |

### Synthetic Example 2

### Preparation of polysiloxane resin for hard coatings (polysiloxane D for imparting flexibility)

A 2 L three-necked flask equipped with a thermometer, a stirrer, and a condenser was charged with 408 g of methyltrimethoxysilane (KBM-13 manufactured by Shin-Etsu Chemical Co., Ltd.) and 400 parts of toluene, and further with 11 g of 98% by weight of methanesulfonic acid as a catalyst. While the internal temperature was kept up to 30°C, 146 g of water was added dropwise to promote hydrolysis of the methyltrimethoxysilane. After completing the dropwise addition, the reaction mixture was stirred at room temperature for 2 hours until the reaction was completed. The acidic components were then neutralized and the resulting methanol was removed by distillation under reduced pressure. The salt of neutralization was completely removed by washing with water twice. The solvent components including toluene were removed again by distillation under reduced pressure at 105°C for 3 hours until weight loss was 1.1% by weight compared to the weight before the drying. 210 g of siloxane resin was obtained as a colorless transparent solid.

The resin had a weight average molecular weight of 7.5×10³ as measured by GPC. ²⁹Si-NMR and IR spectroscopy of this resin revealed that the siloxane resin had the average compositional formula (D):

MeSi(OMe)_{0.06}(OH)_{0.12}(O)_{1.41} (D)

wherein Me is methyl.

The transparent solid resin had a softening point of 73°C as measured by an automatic softening point tester of the ring-and-ball method according to JIS K-2207. A siloxane resin solution D having a solid concentration of 28% by weight was prepared in advance by adding 283 g of the siloxane resin to 717 g of isopropanol for dissolution.

### 2) Synthesis of silicone hard coating composition B

### Synthesis Example 3

### Synthesis Example 1 of topcoat composition

A 2-L flask equipped with a stirrer, condenser, and thermometer was charged with 368 g of methyltrimethoxysilane and 13 g of UV-absorbing silane, and the mixture was stirred and maintained at 20°C. A mixture of 108 g of aqueous dispersion of colloidal silica (Snowtex O having an average particle diameter of 15 to 20 nm and SiO₂ content of 20% manufactured by Nissan Chemical Industries, Ltd.) and 252 g of 0.25N aqueous solution of acetic acid was added and the mixture was stirred at a high speed.

After stirring at 60°C for 3 hours, 330 g of cyclohexanone was added. The methanol generated as a by-product with some water in total weight of 335 g was removed by distillation at atmospheric pressure.

After allowing to cool to room temperature with stirring, 205 g of isopropanol, 400 g of the siloxane resin solution D having the solid concentration of 28% by weight, 4 g of solution F (20% methanol solution F), and 0.6 g of polyether-modified silicone KP-341 (manufactured by Shin-Etsu Chemical Co., Ltd.) were added.

The resulting organopolysiloxane solution had a viscosity of 7.47 mm²/s and a weight average molecular weight of 2,500 as measured by GPC. This product was designated silicon hard coating composition B. The physical properties are shown in Table 2.

**Table 2**

| Physical properties of Silicone hard coating composition B | | |
|---|---|---|
| Physical properties of the solution | | Topcoat Synthesis Example 1 |
| Appearance | | yellow transparent oil |
| Tone | | pale yellow, transparent |
| Content of UV-absorbing group | mmol/g | 2 |
| Viscosity | mm²/s | 7.47 |
| Non-volatile content (%) | 105°C, 0.5 hours | 25 |
| pH | 25°C | 5.5 |
| Refractive index | 25°C | 1.4001 |
| Average molecular weight | GPC (DMF) | 2,500 |

### 3) Synthesis of the polymer for primer

### Synthesis Example 4

### Polymer Synthesis Example 1

A 2-L flask equipped with a stirrer, condenser and thermometer was charged with 248 g of diacetone alcohol as the solvent, and the diacetone alcohol was heated to 80°C under a nitrogen stream.

A mixed monomer solution was preliminarily prepared by mixing 72 g of 2-[2'-hydroxy-5'-(2-methacryloxyethyl)phenyl]-2H-benzotriazole (RUVA-93 manufactured by Otsuka Chemical Co., Ltd.), 80 g of γ-methacryloxypropyltrimethoxysilane (KBM-503 manufactured by Shin-Etsu Chemical Co., Ltd.), 248 g of methyl methacrylate (abbreviated as MMA), and 600 g of diacetone alcohol (abbreviated as DAA). Also, an initiator solution was preliminarily prepared by dissolving 3 g of 2,2'-azobis(2-methylbutyronitrile) (abbreviated as V-59) in 200 g of diacetone alcohol. A 400 g portion of the mixed monomer solution and a 150 g portion of the initiator solution were successively poured into the flask. The formulation is shown in Table 3.

**Table 3**

| Formulation of primer polymer | | |
|---|---|---|
| Formulation used for polymerization | Starting material | Polymer Synthesis Example 1 |
| Polymer starting materials (part by weight) | KBM-503 | 20 |
| | RUVA-93 | 18 |
| | MMA | 62 |
| Solvent | DAA | 60% |
| Polymerization catalyst | V59 | 0.3% |

The reaction was allowed to proceed at 80°C for 30 minutes, and then, the remaining mixed monomer solution and the remaining initiator solution were simultaneously added dropwise over 1.5 hours at 80 to 90°C. The reaction mixture was stirred at 80 to 90°C for a further 5 hours to obtain a copolymer having an alkoxysilyl group and a UV-absorbing group.

The resulting solution of the copolymer had the content of the UV-absorbing group of 18% by weight, the content of the alkoxysilyl group of 20% by weight, and a viscosity of 5,370 mPa·s. The copolymer had a weight average molecular weight of 27,600 as measured by GPC versus polystyrene standards. Other physical properties are shown in Table 4. This copolymer solution was designated UV polymer 1.

**Table 4**

| Physical properties of primer polymer (UV polymer-1) solution | | |
|---|---|---|
| Physical properties of the solution | | Polymer Synthesis Example 1 |
| Appearance | | pale yellow, transparent |
| Weight average molecular weight | GPC/1% THV | 27,600 |
| Dynamic viscosity | mPa·s | 5,370 |
| Refractive index | 25°C | 1.4551 |
| Non-volatile content (%) | 150°C, 0.5 hr | 41.2 |

| | | |
|---|---|---|
| Note: KBM-503: γ-methacryloxypropyltrimethoxysilane RUVA-93: 2-[2'-hydroxy-5'-(2-methacryloxyethyl)phenyl]-2H-benzotriazole (manufactured by Otsuka Chemical Co., Ltd.) MMA: methyl methacrylate | | |

### 4) Synthesis of the primer composition A

### Synthesis Example 5

### Primer Synthesis Example 1

To UV polymer 1 (the polymer solution of Polymer Synthesis Example 1), solvents (DAA, MFDG, and EA), silica sol solution PMA-ST (dispersion of colloidal silica in PGMAC (propylene glycol monomethyl ether acetate) at a solid concentration of 30% by weight having a primary particle size of 10 to 15 nm, manufactured by Nissan Chemical Industries, Ltd.), and triethyl orthoformate were added to prepare Primer composition A.

Type of the solvent and formulation of the primer composition A are shown in Table 5, and physical properties of the solution are shown in Table 6.

**Table 5**

| Formulation of primer composition A | | |
|---|---|---|
| Formulation for polymerization | Starting material | Primer Synthesis Example 1 |
| UV polymer 1 (part by weight) | Amount used (including the solvent) | 30 |
| | (Amount of polymer) | 12 |
| | (Amount of DAA) | 18 |
| Solvent used for dilution (part by weight) | DAA | 43 |
| | MFDG | 8 |
| | EA | 5 |
| Silica sol (part by weight) | PMA-ST | 7 |
| | (Amount of silicon dioxide) | 2 |
| | (Amount of PGMAC) | 5 |
| Additive (part by weight) | OFE | 7 |

**Table 6**

| Physical properties of the solution of primer composition A | | |
|---|---|---|
| Polymer/silica | wt% | 86/14 |
| Appearance | | pale yellow, transparent |
| Viscosity | mm²/s | 16.6 |
| Non-volatile content (%) | 150°C, 0.5 hr | 14.1 |
| pH | 25°C | 6.1 |

| | | |
|---|---|---|
| Note: DAA: diacetone alcohol MFDG: di(propylene glycol) monomethyl ether PGMAC: propylene glycol monomethyl ether acetate EA: ethyl acetate OFE: triethyl orthoformate | | |

### 5) Preparation of curing agent

Curing agents were prepared by the procedure as described below by using a quaternary ammonium hydroxide for the curing catalyst, an organic acid for the regulator agent, and a solvent.

### Production Example 1

### (i) Preparation of curing agent for primer (BA-1)

100 ml flask was charged with 54.5 g of propylene glycol monomethyl ether, and 44 g of 10% by weight aqueous solution of tetrabutylammonium hydroxide was added as a curing catalyst. The mixture was stirred and maintained at 20°C, and 1.5 g of acetic acid was added as a regulator agent. The mixture was stirred at a high speed for 30 minutes.

The resulting transparent solution had a viscosity of 4.42 mm²/s and a pH of 7.63, and the remainder after heating at 150°C for 30 minutes was 2.59%. This solution was designated the curing agent for primer (BA-1).

### Production Example 2

### (ii) Preparation of the curing agent (BA-1) for top coating

100 ml flask was charged with 54.5 g of isopropyl alcohol (IPA), and 44 g of 10% by weight aqueous solution of tetrabutylammonium hydroxide was added as a curing catalyst. The mixture was stirred and maintained at 20°C, and 1.5 g of acetic acid was added as a regulator agent. The mixture was stirred at a high speed for 30 minutes.

The resulting transparent solution had a viscosity of 3.92 mm²/s and a pH of 6.36, and the remainder after heating at 150°C for 30 minutes was 2.39%. This solution was designated the curing agent for primer (BA-2).

### Production Example 3

### (iii) Preparation of the curing agent (BF-1) for top coating

100 ml flask was charged with 54.8 g of isopropyl alcohol (IPA), and 44 g of 10% by weight aqueous solution of tetrabutylammonium hydroxide was added as a curing catalyst. The mixture was stirred and maintained at 20°C, and 1.2 g of formic acid was added as a regulator agent. The mixture was stirred at a high speed for 30 minutes.

The resulting transparent solution had a viscosity of 3.72 mm²/s and a pH of 4.95, and the remainder after heating at 150°C for 30 minutes was 3.98%. This solution was designated the curing agent for primer (BF-1).

### Production Example 4

### (iv) Preparation of the curing agent (MA-1) for top coating

100 ml flask was charged with 50 g of isopropyl alcohol (IPA), and 44 g of 20% by weight aqueous solution of tetramethylammonium hydroxide was added as a curing catalyst. The mixture was stirred and maintained at 20°C, and 6 g of acetic acid was added as a regulator agent. The mixture was stirred at a high speed for 30 minutes.

The resulting transparent solution had a viscosity of 4.86 mm²/s and a pH of 8.07, and the remainder after heating at 150°C for 30 minutes was 14.87%. This solution was designated the curing agent for topcoat (MA-1).

### Production Example 5

### (v) Preparation of the curing agent (MA-2) for top coating

100 ml flask was charged with 14.3 g of isopropyl alcohol (IPA), and 85.7 g of 15% by weight aqueous solution of tetramethylammonium acetate was added with stirring as a curing catalyst and a regulator agent. The mixture was stirred at a high speed for 30 minutes.

The resulting transparent solution had a viscosity of 2.53 mm²/s and a pH of 8.77, and the remainder after heating at 150°C for 30 minutes was 15.42%. This solution was designated the curing agent for topcoat (MA-2).

### Production Example 6

### (vi) Preparation of the curing agent (MF-1) for top coating

100 ml flask was charged with 52 g of isopropyl alcohol (IPA), and 44 g of 20% by weight aqueous solution of tetramethylammonium hydroxide was added as a curing catalyst. The mixture was stirred and maintained at 20°C, and 4 g of formic acid was added as a regulator agent. The mixture was stirred at a high speed for 30 minutes.

The resulting transparent solution had a viscosity of 4.40 mm²/s and a pH of at least 14, and the remainder after heating at 150°C for 30 minutes was 13.1%. This solution was designated the curing agent for topcoat (MF-1).

The physical properties of the curing agents are shown in Table 7.

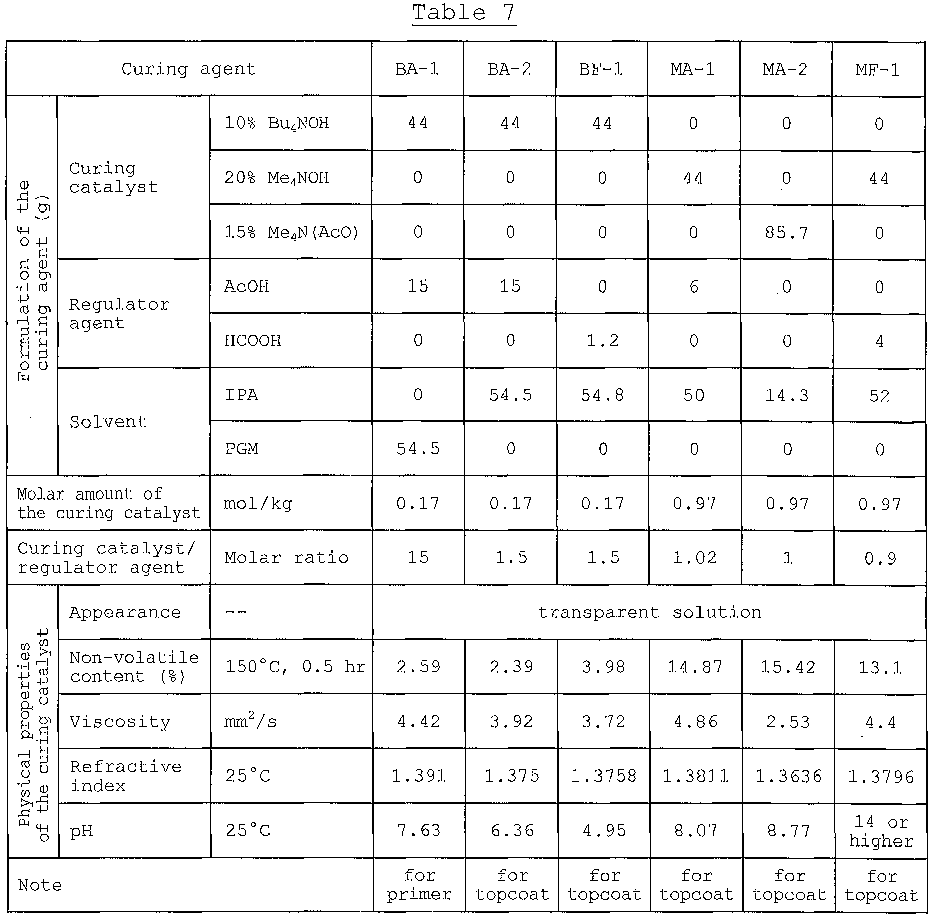

### Production Example 7

### 6) Preparation of liquid coating composition

Solution of primer synthetic example 1: The primer composition (coating composition for the first layer) A or 100 g of the primer composition A admixed with 2.0 g of the primer curing agent (BA-1) was used for the primer composition for the first layer of the Examples and Comparative Examples.

100 g of the silicone hard coating composition (organopolysiloxane composition) B of the Synthetic Example of the topcoat material admixed with 2.0 g of each of the curing agents for the top coating (BA-2 and MA-1) was used for the silicone hard coating composition for the second layer of the Examples and Comparative Examples.

100 g of the composition B admixed with 2.0 g of each of the curing agents for the top coating (MA-1, MA-2, BA-2, MF-1, and BF-1) was used for the silicone hard coating composition of the third layer of the Examples and Comparative Examples.

### Examples 1 to 4 and Comparative Examples 1 to 4

### Preparation of coating

The primer composition was applied by flow coating on a polycarbonate resin sheet of 0.5 mm thick (Iupilon sheet by Mitsubishi Engineering Plastics Corp.) to a dry thickness of 10 µm, air dried at room temperature for 20 minutes, and heat cured at 120°C for 60 minutes to form the primer layer (first layer).

The hard topcoat composition having the curing agent added thereto (silicone hard coating solution) was applied by flow coating on the primer layer to a dry thickness of 5 µm, air dried at room temperature for 20 minutes, and heat cured at 120°C for 60 minutes to form the silicone layer (second layer).

The hard topcoat composition having the curing agent added thereto (top coating solution) was further applied by flow coating on the second layer to a dry thickness of 5 µm, air dried at room temperature for 20 minutes, and heat cured at 120°C for 60 minutes or 100°C for 20 minutes to form the top layer (third layer).

The resulting coatings were evaluated for various physical properties by the procedures as described below. The results of the evaluation are shown in Table 8.

**Table 8**

| Laminate | | Example | Comparative Example | | | Example | | | Comparative Example |
|---|---|---|---|---|---|---|---|---|---|
| | | 1 | 1 | 2 | 3 | 2 | 3 | 4 | 4 |
| First layer | Primer | A | A | A | A | A | A | A | A |
| | Curing agent | None | None | None | BA-1 | None | None | None | None |
| Second layer | Silicone layer | B | B | B | B | B | B | B | B |
| | Curing agent | BA-2 | MA-1 | BA-2 | BA-2 | BA-2 | BA-2 | BA-2 | BA-2 |
| Third layer | Top layer | B | B | B | B | B | B | B | B |
| | Curing agent | MA-1 | MA-1 | BA-2 | MA-1 | MA-2 | MF-1 | MF-1 | BF-1 |
| Coating conditions | Curing temperature, time | 120°C, 1 hr | | | | | | 100°C, 20 min | |
| Coating | Appearance | transparent, good | | | | | | | |
| | Initial adhesion | 100 | 100 | 100 | 92 | 100 | 100 | 100 | 100 |
| | Boiling adhesion (100°C, 4 hr) | 100 | 64 | 88 | 0 | 100 | 100 | 100 | 52 |
| | Initial Hz | 0.38 | 2.8 | 0.36 | 0.21 | 0.15 | 0.09 | 1.09 | 0.68 |
| | Taber abrasion (Hz) | 2.6 | 5.3 | 6.67 | 2.84 | 2.33 | 1.8 | 8.68 | 13.66 |
| | ΔHz | 2.22 | 2.5 | 6.31 | 2.63 | 2.18 | 1.71 | 7.59 | 12.98 |
| Workability | Film formation | good | cracks | good | good | good | good | good | good |
| Evaluation of Coating | Appearance | ○ | Δ | ○ | ⊚ | ⊚ | ⊚ | ○ | ○ |
| | Adhesion | ○ | Δ | Δ | × | ○ | ○ | ○ | ○ |
| | Hardness | ○ | ○ | ○ | ○ | ○ | ⊚ | ○ | × |
| General evaluation | | ○ | × | × | × | ⊚ | ⊚ | ○ | × |

| | | | | | | | | | |
|---|---|---|---|---|---|---|---|---|---|
| Evaluation of appearance (initial Hz): ⊚: less than 0.3, ○: less than 1.5, Δ: less than 3, ×: 3 or more Evaluation of adhesion: ○: both initial adhesion and boiling adhesion are 100%, Δ: only initial adhesion is 100%, ×: even initial adhesion is not 100% Evaluation of Hardness (ΔHz): ⊚: less than 2, ○: less than 10, ×: 10 or more General evaluation: ⊚: Excellent, ○: practically acceptable, ×: practically unacceptable | | | | | | | | | |

As demonstrated by the results, the plastic polycarbonate resin covered by the primer layer and the hard top layers of the present invention exhibited excellent appearance, adhesion, and hardness, with excellent overall evaluation.

### Evaluation Examples

Various physical properties of the Examples were measured and evaluated by the procedure as described below.

### Evaluation methods

The polycarbonate resin covered with the hard coating was evaluated for the properties as a coating (film formation capability, appearance, adhesion, and hardness).

### (1) Evaluation of film formation capability

Test piece of the polycarbonate resin film prepared by disposing the primer coating (the primer layer: first layer), the silicone hard coating layer (the silicone hard layer: second layer), and the top coating layer (the silicone hard layer: third layer) in this order was checked for the crack generation by visually observing the outer appearance.

### (2) Evaluation of coating appearance

Appearance of the laminate test piece was measured in terms of haze (referred to as Hz) by using a haze meter NDH 2000 (manufactured by Nippon Denshoku Industries Co., Ltd., and the appearance was evaluated ⊚ (excellent) when the haze was less than 0.3, ○ (practically usable) when the haze was at least 0.3 and up to 1.5, Δ (usable depending on the application and conditions) when the haze was at least 1.5 and up to 3, and × (practically unusable) when the haze was at least 3.

### (3) Evaluation of adhesion of coating to polycarbonate resin film

Initial adhesion was measured by a cross-hatch adhesion test according to JIS K-5400 by scribing 6 longitudinal and 6 transverse lines at an interval of 2 mm through the coating with a razor to define 25 square sections, tightly attaching a commercially available adhesive tape to the coating, rapidly peeling the adhesive tape at an angle of 90°, and counting the number (X) of coating sections remaining unpeeled. The result was reported as X/25 in %. In addition, adhesion upon boiling was evaluated by immersing the test piece in boiling water for 4 hours, and visually inspecting the outer appearance. An adhesion test was also carried by the procedure as described above.

The adhesion was evaluated ○ (practically usable) when the result of the initial adhesion test and the result of the boiling adhesion test were both 100%, Δ (usable in some applications under some conditions) when the result of the initial adhesion test was 100% while the result of the boiling adhesion test was less than 100%, and × (practically unusable) when the result of the initial adhesion test and the result of the boiling adhesion test were both less than 100%.

### (4) Evaluation of coating hardness

An abrasion test was carried out for evaluation of scratch resistance by the procedure according to ASTM D1044 using a Taber abrasion tester (Taber 5130 Abraser manufactured by Toyo Seiki Seisaku-sho, LTD.) and mounting CS-10F wheels, rotating under a load of 500 g over 500 revolutions, and measuring haze (H).

Scratch resistance ΔHz (%) was evaluated in terms of the haze after the test minus the haze before the test.

The coating was evaluated by the following criteria:
⊚ (excellent): ΔHz < 2.0
○ (practically usable): 2.0 ≤ ΔHz < 10.0
× (practically unusable): 10.0 ≤ ΔHz

## Claims

1. A plastic substrate for automotive glazing which is a resin-coated article comprising a plastic substrate and resin layers comprising at least 3 layers disposed on the plastic substrate, the 3 layers comprising
first layer in contact with the substrate surface, which is a layer prepared by curing a coating composition containing a vinyl copolymer having an alkoxysilyl group and a UV-absorbing group and a fine particle silicon oxide and not containing any curing catalyst;
second layer in contact with the first layer, which is a layer prepared by curing an organopolysiloxane composition containing a curing catalyst in the form of an alkylammonium compound other than methylammonium compounds and a co-hydrolyzate of an organosilicon compound containing a UV-absorbing organooxysilane and a fine particle silicon oxide; and
third layer in contact with the second layer, which is a layer prepared by curing an organopolysiloxane composition containing a curing catalyst in the form of a methylammonium compound having an activity higher than the catalyst used in the second layer, and a co-hydrolyzate of an organosilicon compound containing a UV-absorbing organooxysilane and a fine particle silicon oxide.

2. A plastic substrate for automotive glazing according to claim 1 wherein
the first layer is a layer formed from a coating agent containing a UV-absorbing vinyl copolymer comprising (a) a UV-absorbing vinyl monomer, (b) an alkoxysilyl group-containing vinyl monomer, and (c) a vinyl monomer other than (a) and (b); and a fine particle silicon oxide; and
the second and the third layers are respectively a layer formed from a UV-absorbing organopolysiloxane composition containing the following (i) to (iv):
(i)
(A) at least one hydrolysable silicon compound represented by the following formula (1):
R'ₐSi(OR")₍₄₋ₐ₎ (1)
wherein R' is independently an organic group containing 1 to 18 carbon atoms, R" is independently an organic group containing 1 to 6 carbon atoms, and a is an integer of 0 ≤ a ≤ 2; and
(B) a reactive UV-absorbing agent which is a benzophenone having an alkoxysilyl group;
(ii) a fine particle silicon dioxide;
(iii) a siloxane resin having a weight average molecular weight of at least 2,000 which is solid at a temperature of up to 40°C and which is represented by the following average compositional formula (2):
R"'_{b}Si(OR" ")_{c}(OH)_{d}O_{(4-b-c-d)/2} (2)
wherein R"' is independently an organic group containing 1 to 18 carbon atoms, R"" is independently an organic group containing 1 to 4 carbon atoms, b, c and d are numbers satisfying 0.8 ≤ b ≤ 1.5, 0 ≤ c ≤ 0.3, 0.001 ≤ d ≤ 0.5, and 0.801 ≤ b+c+d < 2; and
(iv) a curing catalyst in an amount of 0.0001 to 30 % by weight in relation to the solid content of the components (i) to (iii),
the organopolysiloxane composition being prepared from the components (i) to (iv) by blending the components (iii) and (iv) with co-hydrolyzate (partial hydrolyzate) or co-condensation hydrolyzate (partial condensation hydrolyzate) of the components (i)(A) and (ii) in the presence of (i) (B).

3. A plastic substrate for automotive glazing according to claim 1 or 2 wherein the curing catalyst of the organopolysiloxane composition for the third layer comprises a basic organic compound (a curing agent) and an acidic organic compound (a regulator agent), and the basic organic compound is an ammonium compound represented by the following general formula (3):
[(R¹)(R²)(R³)(R⁴)N]⁺X⁻ (3)
wherein R¹, R², R³, and R⁴ are independently hydrogen atom or an alkyl group or a halogenated alkyl group containing 1 to 18 carbon atoms, at least one of which being methyl group, and X⁻ is a hydroxide anion or an organic carboxylate anion.

4. A plastic substrate for automotive glazing according to any one of claims 1 to 3 wherein the curing catalyst of the organopolysiloxane composition for the second layer is selected from among tetraethylammonium hydroxide,
tetra-propylammonium hydroxide,
tetra-butylammonium hydroxide,
tetra-pentylammonium hydroxide,
tetra-hexylammonium hydroxide,
tetracyclohexylammonium hydroxide,
tetrakis (trifluoromethyl) ammonium hydroxide, and
salts of such hydroxide with a carboxylic acid, and the curing catalyst of the organopolysiloxane composition for the third layer is selected from among tetramethylammonium hydroxide,
trimethylcyclohexylammonium hydroxide,
trimethyl (trifluoromethyl) ammonium hydroxide,
trimethyl-butylammonium hydroxide, and
salts of such hydroxide with a carboxylic acid.

5. A plastic substrate for automotive glazing according to any one of claims 1 to 4 which further comprises a regulator agent in the form of a carboxylic acid compound selected from among formic acid, acetic acid, propionic acid, oxalic acid, lactic acid, citric acid, succinic acid, malonic acid, tartaric acid, and butyric acid so that a carboxylic acid compound having a low molecular weight is incorporated for the second layer and a carboxylic acid compound having a high molecular weight is incorporated for the third layer.

6. A plastic substrate for automotive glazing according to claim 5 wherein the ratio of the curing agent and the regulator agent is 0.5 to up to 10 moles.

7. A plastic substrate for automotive glazing according to any one of claims 1 to 6 wherein the plastic substrate comprises a polycarbonate resin.

8. A method for repairing a plastic substrate for automotive glazing which comprises
a plastic substrate; and
a laminate comprising first layer on the substrate prepared by curing a coating composition containing a vinyl copolymer having an alkoxysilyl group and a UV-absorbing group and a fine particle silicon oxide and not containing any curing catalyst, and second layer on the first layer prepared by curing an organopolysiloxane composition containing a curing catalyst in the form of an alkylammonium compound other than methylammonium compounds and a co-hydrolyzate of an organosilicon compound containing a UV-absorbing organooxysilane and a fine particle silicon oxide; wherein
the laminate of the first and the second layers is repaired by disposing a silicone hard coating (third layer) on the laminate, wherein the third layer is formed from an organopolysiloxane composition containing a basic curing catalyst in the form of a methylammonium compound having a curing activity higher than the curing catalyst in the organopolysiloxane composition.

9. A method for repairing the plastic substrate for automotive glazing according to claim 8 wherein
the first layer is a layer formed from a coating agent containing a UV-absorbing vinyl copolymer comprising (a) a UV-absorbing vinyl monomer, (b) an alkoxysilyl group-containing vinyl monomer, and (c) a vinyl monomer other than (a) and (b); and a fine particle silicon oxide; and
the second and the third layers are respectively a layer formed from a UV-absorbing organopolysiloxane composition containing the following (i) to (iv):
(i)
(A) at least one hydrolysable silicon compound represented by the following formula (1):
R'ₐSi(OR")₍₄₋ₐ₎ (1)
wherein R' is independently an organic group containing 1 to 18 carbon atoms, R" is independently an organic group containing 1 to 6 carbon atoms, and a is an integer of 0 ≤ a ≤ 2; and
(B) a reactive UV-absorbing agent which is a benzophenone having an alkoxysilyl group;
(ii) a fine particle silicon dioxide;
(iii) a siloxane resin having a weight average molecular weight of at least 2,000 which is solid at a temperature of up to 40°C and which is represented by the following average compositional formula (2):
R"'_{b}Si(OR"")_{c}(OH)_{d}O_{(4-b-c-d)/2} (2)
wherein R"' is independently an organic group containing 1 to 18 carbon atoms, R"" is independently an organic group containing 1 to 4 carbon atoms, b, c and d are numbers satisfying 0.8 ≤ b ≤ 1.5, 0 ≤ c ≤ 0.3, 0.001 ≤ d ≤ 0.5, and 0.801 ≤ b+c+d < 2; and
(iv) a curing catalyst in an amount of 0.0001 to 30% by weight in relation to the solid content of the compounds (i) to (iii),
the organopolysiloxane composition being prepared from the components (i) to (iv) by blending the components (iii) and (iv) with co-hydrolyzate (partial hydrolyzate) or co-condensation hydrolyzate (partial condensation hydrolyzate) of the components (i) (A) and (ii) in the presence of (i)(B).

10. A method for repairing the plastic substrate for automotive glazing according to claim 8 or 9 wherein the curing catalyst of the organopolysiloxane composition for the third layer comprises a basic organic compound (a curing agent) and an acidic organic compound (a regulator agent), and the basic organic compound is an ammonium compound represented by the following general formula (3):
[(R¹)(R²)(R³)(R⁴)N]⁺X⁻ (3)
wherein R¹, R², R³, and R⁴ are independently hydrogen atom or an alkyl group or a halogenated alkyl group containing 1 to 18 carbon atoms, at least one of which being methyl group, and X⁻ is a hydroxide anion or an organic carboxylate anion.

11. A method for repairing the plastic substrate for automotive glazing according to any one of claims 8 to 10 wherein the plastic substrate comprises a polycarbonate resin.

12. A method for repairing the plastic substrate for automotive glazing according to any one of claims 8 to 11 wherein the curing catalyst of the organopolysiloxane composition for the second layer is selected from among tetraethylammonium hydroxide, tetra-propylammonium hydroxide,
tetra-butylammonium hydroxide,
tetra-pentylammonium hydroxide,
tetra-hexylammonium hydroxide,
tetracyclohexylammonium hydroxide,
tetrakis (trifluoromethyl) ammonium hydroxide, and
salts of such hydroxide with a carboxylic acid, and the curing catalyst of the organopolysiloxane composition for the third layer is selected from among tetramethylammonium hydroxide,
trimethylcyclohexylammonium hydroxide,
trimethyl (trifluoromethyl) ammonium hydroxide,
trimethyl-butylammonium hydroxide, and
salts of such hydroxide with a carboxylic acid.

13. A method for repairing the plastic substrate for automotive glazing according to any one of claims 8 to 12 wherein the second and third layers further comprise a regulator agent in the form of a carboxylic acid compound selected from among formic acid, acetic acid, propionic acid, oxalic acid, lactic acid, citric acid, succinic acid, malonic acid, tartaric acid, and butyric acid so that a carboxylic acid compound having a low molecular weight is incorporated for the second layer and a carboxylic acid compound having a high molecular weight is incorporated for the third layer.

14. A method for repairing the plastic substrate for automotive glazing according to claim 13 wherein the ratio of the curing agent and the regulator agent is 0.5 to up to 10 moles.

## Patentansprüche

1. Kunststoffsubstrat zur Automobilverglasung, bei dem es sich um einen harzbeschichteten Artikel handelt, umfassend ein Kunststoffsubstrat und Harzschichten, umfassend mindestens 3 auf dem Kunststoffsubstrat angeordnete Schichten, wobei die 3 Schichten umfassen
erste Schicht in Kontakt mit der Substratoberfläche, welche eine Schicht ist, hergestellt durch Härten einer Beschichtungszusammensetzung, enthaltend ein Vinylcopolymer mit einer Alkoxysilylgruppe und einer UV-absorbierenden Gruppe, und ein feinteiliges Siliciumoxid, und keinerlei Härtungskatalysator enthaltend;
zweite Schicht in Kontakt mit der ersten Schicht, welche eine Schicht ist, hergestellt durch Härten einer Organopolysiloxanzusammensetzung, enthaltend einen Härtungskatalysator in Form einer Alkylammoniumverbindung, welche von Methylammoniumverbindungen verschieden ist, und ein Cohydrolysat einer Organosiliciumverbindung, enthaltend ein UV-absorbierendes Organooxysilan und feinteiliges Siliciumoxid; und
dritte Schicht in Kontakt mit der zweiten Schicht, welche eine Schicht ist, hergestellt durch Härten einer Organopolysiloxanzusammensetzung, enthaltend einen Härtungskatalysator in Form einer Methylammoniumverbindung mit einer Aktivität, die höher ist als die des Katalysators, welcher in der zweiten Schicht verwendet wird, und ein Cohydrolysat einer Organosiliciumverbindung, enthaltend eine UV-absorbierendes Organooxysilan und feinteiliges Siliciumoxid.

2. Kunststoffsubstrat für Automobilverglasung nach Anspruch 1, wobei
die erste Schicht eine Schicht ist, gebildet aus einem Beschichtungsmittel, enthaltend ein UV-absorbierendes Vinylcopolymehr, umfassend (a) ein UV-absorbierendes Vinylmonomer, (b) ein alkoxysilylgruppenhaltiges Vinylmonomer und (c) ein Vinylmonomer, das von (a) und (b) verschieden ist; und ein feinteiliges Siliciumoxid; und
die zweite und die dritte Schicht jeweils eine Schicht ist, gebildet aus einer UV-absorbierenden Organopolysiloxanzusammensetzung, enthaltend die folgenden (i) bis (iv):
(i)
(A) mindestens eine hydrolysierbare Siliciumverbindung, wiedergegeben durch die folgende Formel (1):
R'ₙSi(OR")₍₄₋ₐ₎ (1)
worin R' unabhängig eine organische Gruppe ist, enthaltend 1 bis 18 Kohlenstoffatome, R" unabhängig eine organische Gruppe ist, enthaltend 1 bis 6 Kohlenstoffatome, und a eine ganze Zahl von 0 ≤ a ≤ 2 ist; und
(B) ein reaktives UV-absorbierendes Mittel, das ein Benzophenon mit einer Alkoxysilylgruppe ist;
(ii) ein feinteiliges Siliciumdioxid;
(iii) ein Siloxanharz mit einem gewichtsmittleren Molekulargewicht von mindestens 2.000, das bei einer Temperatur von bis zu 40°C fest ist, und das wiedergegeben wird durch die folgende durchschnittliche Zusammensetzungsformel (2):
R"'_{b}Si(OR" "_{c}(OH)_{d}O_{(4-b-c-d)/2} (2)
worin R"' unabhängig eine organische Gruppe ist, enthaltend 1 bis 18 Kohlenstoffatome, R"" unabhängig eine organische Gruppe ist, enthaltend 1 bis 4 Kohlenstoffatome, b, c und d Zahlen sind, welche 0,8 ≤ b ≤ 1,5, 0 ≤ c ≤ 0,3, 0,001 ≤ d ≤ 0,5 und 0,801 ≤ b+c+d < 2 erfüllen; und
(iv) einen Härtungskatalysator in einer Menge von 0,0001 bis 30 Gew.-% mit Bezug auf den Feststoffgehalt der Komponenten (i) bis (iii),
wobei die Organopolysiloxanzusammensetzung hergestellt wird aus den Komponenten (i) bis (iv) durch Mischen der Komponenten (iii) und (iv) mit Cohydrolysat (teilweises Hydrolysat) oder Co-Kondensationshydrolysat (teilweises Kondensationshydrolysat) der Komponenten (i)(A) und (ii) in Gegenwart von (i)(B).

3. Kunststoffsubstrat zur Automobilverglasung nach Anspruch 1 oder 2, wobei der Härtungskatalysator der Organopolysiloxanzusammensetzung für die dritte Schicht eine basische organische Verbindung (ein Härtungsmittel) und eine saure organische Verbindung (ein Regulatormittel) umfasst, und die basische organische Verbindung eine Ammoniumverbindung ist, wiedergegeben durch die folgende allgemeine Formel (3):
[(R¹)(R²)(R³)(R⁴)N]⁺X⁻ (3)
worin R¹, R², R³ und R⁴ unabhängig Wasserstoffatom oder eine Alkylgruppe oder eine halogenierte Alkylgruppe sind, enthaltend 1 bis 18 Kohlenstoffatome, wobei mindestens eine davon Methylgruppe ist, und X⁻ ein Hydroxidanion oder ein organisches Carboxylatanion ist.

4. Kunststoffsubstrat zur Automobilverglasung nach mindestens einem der Ansprüche 1 bis 3, wobei der Härtungskatalysator der Organopolysiloxanzusammensetzung für die zweite Schichte gewählt ist aus Tetraethylammoniumhydroxid, Tetrapropylammoniumhydroxid, Tetrabutylammoniumhydroxid, Tetrapentylammoniumhydroxid, Tetrahexylammoniumhydroxid, Tetracylohexylammoniumhydroxid, Tetrakis(trifluormethyl)ammoniumhydroxid und Salzen eines solchen Hydroxids mit einer Carbonsäure, und der Härtungskatalysator der Organopolysiloxanzusammensetzung für die dritte Schicht gewählt ist aus Tetramethylammoniumhydroxid, Trimethylcyclohexylammoniumhydroxid, Trimethyl(trifluormethyl)ammoniumhydroxid, Trimethyl-butylammoniumhydroxid und Salzen eines solchen Hydroxids mit einer Carbonsäure.

5. Kunststoffsubstrat zur Automobilverglasung nach mindestens einem der Ansprüche 1 bis 4, das weiterhin ein Regulatormittel in Form einer Carbonsäureverbindung umfasst, gewählt aus Ameisensäure, Essigsäure, Propionsäure, Oxalsäure, Milchsäure, Zitronensäure, Bernsteinsäure, Malonsäure, Weinsäure und Buttersäure, sodass eine Carbonsäureverbindung mit einem niedrigen Molekulargewicht für die zweite Schicht eingebracht wird, und eine Carbonsäureverbindung mit einem hohen Molekulargewicht für die dritte Schicht eingebracht wird.

6. Kunststoffsubstrat zur Automobilverglasung nach Anspruch 5, wobei der Anteil des Härtungsmittels und des Regulatormittels 0,5 bis zu 10 Mole beträgt.

7. Kunststoffsubstrat zur Automobilverglasung nach mindestens einem der Ansprüche 1 bis 6, wobei das Kunststoffsubstrat ein Polycarbonatharz umfasst.

8. Verfahren zum Reparieren eines Kunststoffsubstrats zur Automobilverglasung, welches umfasst
ein Kunststoffsubstrat; und
ein Laminat, umfassend eine erste Schicht auf dem Substrat, hergestellt durch Härten einer Beschichtungszusammensetzung, enthaltend ein Vinylcopolymer mit einer Alkoxysilylgruppe und einer UV-absorbierenden Gruppe und ein feinteiliges Siliciumoxid und enthaltend keinerlei Härtungskatalysator, und eine zweite Schicht auf der ersten Schicht, hergestellt durch Härten einer Organopolysiloxanzusammensetzung, enthaltend einen Härtungskatalysator in Form einer Alkylammoniumverbindung, die von Methylammoniumverbindungen verschieden ist, und ein Cohydrolysat einer Organosiliciumverbindung, enthaltend ein UV-absorbierendes Organooxysilan und ein feinteiliges Siliciumoxid; wobei das Laminat aus der ersten und der zweiten Schicht repariert wird durch Anordnen einer Siliconhartbeschichtung (dritte Schicht) auf dem Laminat, wobei die dritte Schicht gebildet wird aus einer Organopolysiloxanzusammensetzung, enthaltend einen basischen Härtungskatalysator in Form einer Methylammoniumverbindung mit einer Härtungsaktivität, die höher ist als die des Härtungskatalysators in der Organopolysiloxanzusammensetzung.

9. Verfahren zum Reparieren des Kunststoffsubstrats zur Automobilverglasung nach Anspruch 8, wobei
die erste Schicht eine Schicht ist, gebildet aus einem Beschichtungsmittel, enthaltend ein UV-absorbierendes Vinylcopolymehr, umfassend (a) ein UV-absorbierendes Vinylmonomer, (b) ein alkoxysilylgruppenhaltiges Vinylmonomer und (c) ein Vinylmonomer, das von (a) und (b) verschieden ist; und ein feinteiliges Siliciumoxid; und
die zweite und die dritte Schicht jeweils eine Schicht ist, gebildet aus einer UV-absorbierenden Organopolysiloxanzusammensetzung, enthaltend die folgenden (i) bis (iv):
(i)
(A) mindestens eine hydrolysierbare Siliciumverbindung, wiedergegeben durch die folgende Formel (1):
R'ₐSi(OR")₍₄₋ₐ₎ (1)
worin R' unabhängig eine organische Gruppe ist, enthaltend 1 bis 18 Kohlenstoffatome, R" unabhängig eine organische Gruppe ist, enthaltend 1 bis 6 Kohlenstoffatome, und a eine ganze Zahl von 0 ≤ a ≤ 2 ist; und
(B) ein reaktives UV-absorbierendes Mittel, das ein Benzophenon mit einer Alkoxysilylgruppe ist;
(ii) ein feinteiliges Siliciumdioxid;
(iii) ein Siloxanharz mit einem gewichtsmittleren Molekulargewicht von mindestens 2.000, das bei einer Temperatur von bis zu 40°C fest ist, und das wiedergegeben wird durch die folgende durchschnittliche Zusammensetzungsformel (2):
R"'_{b}Si(OR" ")_{c}(OH)_{d}O_{(4-b-c-d)/2} (2)
worin R"' unabhängig eine organische Gruppe ist, enthaltend 1 bis 18 Kohlenstoffatome, R"" unabhängig eine organische Gruppe ist, enthaltend 1 bis 4 Kohlenstoffatome, b, c und d Zahlen sind, welche 0,8 ≤ b ≤ 1,5, 0 ≤ c ≤ 0,3, 0,001 ≤ d ≤ 0,5 und 0,801 ≤ b+c+d < 2 erfüllen; und
(iv) einen Härtungskatalysator in einer Menge von 0,0001 bis 30 Gew.-% mit Bezug auf den Feststoffgehalt der Komponenten (i) bis (iii),
wobei die Organopolysiloxanzusammensetzung hergestellt wird aus den Komponenten (i) bis (iv) durch Mischen der Komponenten (iii) und (iv) mit Cohydrolysat (teilweises Hydrolysat) oder Co-Kondensationshydrolysat (teilweises Kondensationshydrolysat) der Komponenten (i)(A) und (ii) in Gegenwart von (i)(B).

10. Verfahren zum Reparieren des Kunststoffsubstrats zur Automobilverglasung nach Anspruch 8 oder 9, wobei der Härtungskatalysator der Organopolysiloxanzusammensetzung für die dritte Schicht eine basische organische Verbindung (ein Härtungsmittel) und eine saure organische Verbindung (ein Regulatormittel) umfasst, und die basische organische Verbindung eine Ammoniumverbindung ist, wiedergegeben durch die folgende allgemeine Formel (3):
[(R¹)(R²)(R³)(R⁴)N]⁺X⁻ (3)
worin R¹, R², R³ und R⁴ unabhängig Wasserstoffatom oder eine Alkylgruppe oder eine halogenierte Alkylgruppe sind, enthaltend 1 bis 18 Kohlenstoffatome, wobei mindestens eine davon Methylgruppe ist, und X⁻ ein Hydroxidanion oder ein organisches Carboxylat-anion ist.

11. Verfahren zum Reparieren des Kunststoffsubstrats zur Automobilverglasung nach mindestens einem der Ansprüche 8 bis 10, wobei das Kunststoffsubstrat ein Polycarbonatharz umfasst.

12. Verfahren zum Reparieren des Kunststoffsubstrats zur Automobilverglasung nach mindestens einem der Ansprüche 8 bis 11, wobei der Härtungskatalysator der Organopolysiloxanzusammensetzung für die zweite Schichte gewählt ist aus Tetraethylammoniumhydroxid, Tetrapropylammoniumhydroxid, Tetrabutylammoniumhydroxid, Tetrapentylammoniumhydroxid, Tetrahexylammoniumhydroxid, Tetracylohexylammoniumhydroxid, Tetrakis(trifluormethyl)ammoniumhydroxid und Salzen eines solchen Hydroxids mit einer Carbonsäure, und der Härtungskatalysator der Organopolysiloxanzusammensetzung für die dritte Schicht gewählt ist aus Tetramethylammoniumhydroxid, Trimethylcyclohexylammoniumhydroxid, Trimethyl(trifluormethyl)ammoniumhydroxid, Trimethyl-butylammoniumhydroxid und Salzen eines solchen Hydroxids mit einer Carbonsäure.

13. Verfahren zum Reparieren des Kunststoffsubstrats zur Automobilverglasung nach mindestens einem der Ansprüche 8 bis 12, wobei die zweite und dritte Schicht weiterhin ein Regulatormittel in Form einer Carbonsäureverbindung umfasst, gewählt aus Ameisensäure, Essigsäure, Propionsäure, Oxalsäure, Milchsäure, Zitronensäure, Bernsteinsäure, Malonsäure, Weinsäure und Buttersäure, sodass eine Carbonsäureverbindung mit einem niedrigen Molekulargewicht für die zweite Schicht eingebracht wird, und eine Carbonsäureverbindung mit einem hohen Molekulargewicht für die dritte Schicht eingebracht wird.

14. Verfahren zum Reparieren des Kunststoffsubstrats zur Automobilverglasung nach Anspruch 13, wobei der Anteil des Härtungsmittels und des Regulatormittels 0,5 bis zu 10 Mole beträgt.

## Revendications

1. Un substrat en plastique pour un vitrage automobile qui est un article revêtu de résine comprenant un substrat en matière plastique et des couches de résine comprenant au moins 3 couches disposées sur le substrat en plastique, les 3 couches comprenant
une première couche en contact avec la surface du substrat, qui est une couche préparée par durcissement d'une composition de revêtement contenant un copolymère vinylique ayant un groupe alcoxysilyle et un groupe absorbant les UV et un oxyde de silicium à particules fines et ne contenant pas de catalyseur de durcissement;
une deuxième couche en contact avec la première couche, qui est une couche préparée par durcissement d'une composition d'organopolysiloxane contenant un catalyseur de durcissement dans la forme d'un composé alkylammonium autre que les composés méthylammonium et un co-hydrolysat d'un composé organosilicium contenant un organooxysilane absorbant les UV et un oxyde de silicium à particules fines; et
une troisième couche en contact avec la deuxième couche, qui est une couche préparée par durcissement d'une composition d'organopolysiloxane contenant un catalyseur de durcissement dans la forme d'un composé méthylammonium ayant une activité supérieure au catalyseur utilisé dans la seconde couche et un co-hydrolysat d'un composé organosilicié contenant un organooxysilane absorbant les UV et un oxyde de silicium à particules fines.

2. Un substrat en plastique pour un vitrage automobile selon la revendication 1, dans lequel
la première couche est une couche formée à partir d'un agent de revêtement contenant un copolymère vinylique absorbant les UV comprenant (a) un monomère vinylique absorbant les UV, (b) un monomère vinylique contenant un groupe alcoxysilyle, et (c) un monomère vinylique autre que (a) et (b); et un oxyde de silicium à particules fines; et
la deuxième et la troisième couches sont respectivement une couche formée à partir d'une composition d'organopolysiloxane absorbant les UV contenant les suivants (i) à (iv):
(i)
(A) au moins un composé de silicium hydrolysable représenté par la formule (1) suivante :
R'ₐSi(OR")₍₄₋ₐ₎ (1)
dans laquelle R' représente indépendamment un groupe organique contenant 1 à 18 atomes de carbone, R" représente indépendamment un groupe organique contenant 1 à 6 atomes de carbone, et a est un nombre entier de 0 ≤ a ≤ 2; et
(B) un agent absorbant les UV réactifs qui est une benzophénone ayant un groupe alcoxysilyle;
(ii) un dioxyde de silicium à particules fines;
(iii) une résine de siloxane ayant une masse moléculaire moyenne en poids d'au moins 2.000 qui est solide à une température allant jusqu'à 40°C et qui est représentée par la formule de composition moyenne (2) suivante:
R"'_{b}Si(OR" ")_{c}(OH)_{d}O_{(4-b-c-d)/2} (2)
dans laquelle R"' représente indépendamment un groupe organique contenant 1 à 18 atomes de carbone, R" " représente indépendamment un groupe organique contenant 1 à 4 atomes de carbone, b, c et d sont des nombres satisfaisant 0,8 ≤ b ≤ 1,5, 0 ≤ c ≤ 0,3, 0,001 ≤ d ≤ 0,5 et 0,801 ≤ b + c + d <2 ; et
(iv) un catalyseur de durcissement dans une quantité de 0,0001 à 30% en poids en relation au contenu en solides des composants (i) à (iii),
la composition organopolysiloxane étant préparée à partir des composants (i) à (iv) en mélangeant les composants (iii) et (iv) avec un cohydrolysat (hydrolysat partiel) ou un hydrolysat de condensation (hydrolysat de condensation partielle) des composants (i)(A) et (ii) dans le présence de (i)(B).

3. Un substrat en plastique pour un vitrage automobile selon la revendication 1 ou 2, dans lequel le catalyseur de durcissement de la composition d'organopolysiloxane pour la troisième couche comprend un composé organique basique (un agent de durcissement) et un composé organique acide (un agent régulateur) et le composé organique basique est un composé d'ammonium représenté par la formule générale (3) suivante:
[(R¹)(R²)(R³)(R⁴)N]X⁻ (3)
dans lequel R¹, R², R³ et R⁴ sont indépendamment un atome d'hydrogène ou un groupe alkyle ou un groupe alkyle halogéné contenant 1 à 18 atomes de carbone, dont au moins un groupe méthyle et X⁻ est un anion hydroxyde ou un anion carboxylate organique.

4. Un substrat en plastique pour un vitrage automobile selon l'une quelconque des revendications 1 à 3, dans lequel le catalyseur de durcissement de la composition d'organopolysiloxane pour la deuxième couche est choisi parmi
l'hydroxide de tetra-éthylammonium,
l'hydroxide de tetra-propylammonium,
l'hydroxide de tetra-butylammonium,
l'hydroxide de tetra-pentylammonium,
l'hydroxide de tetra-hexylammonium,
l'hydroxide de tetracyclohexylammonium,
l'hydroxide de tetrakis(trifluorométhyl)ammonium, et
les sels d'un tel hydroxide avec un acide carboxylique, et le catalyseur de durcissement de la composition d'organopolysiloxane pour la troisième couche est choisi parmi l'hydroxide de tetra-méthylammonium,
l'hydroxide de triméthylcyclohexylammonium,
l'hydroxide de triméthyl(trifluorométhyl)ammonium,
l'hydroxide de triméthyl-butylammonium, et
les sels de tel hydroxide avec un acide carboxylique.

5. Un substrat en plastique pour un vitrage automobile selon l'une quelconque des revendications 1 à 4 qui comprend en outre un agent régulateur dans la forme d'un acide carboxylique choisi parmi l'acide formique, l'acide acétique, l'acide propionique, l'acide oxalique, l'acide lactique, l'acide citrique, l'acide succinique, l'acide malonique, l'acide tartrique, et l'acide butyrique, de telle manière que le composé d'acide carboxylique ayant un bas poids moléculaire est incorporé pour la deuxième couche et un acide carboxylique ayant un haut poids moléculaire est incorporé pour la troisième couche.

6. Un substrat en plastique pour un vitrage automobile selon la revendication 5 dans lequel le rapport de l'agent de durcissement et l'agent régulateur est de 0,5 à jusqu'à 10 moles.

7. Un substrat en plastique pour un vitrage automobile selon l'une quelconque des revendications 1 à 6 dans lequel le substrat en plastique comprend une résine de polycarbonate.

8. Un procédé de réparation d'un substrat en plastique pour vitrage automobile qui comprend
un substrat en matière plastique; et
un stratifié comprenant une première couche sur le substrat préparé par durcissement d'une composition de revêtement contenant un copolymère vinylique ayant un groupe alcoxysilyle et un groupe absorbant les UV et un oxyde de silicium à particules fines et ne contenant pas de catalyseur de durcissement et une deuxième couche sur la première couche préparée par durcissement d'une composition d'organopolysiloxane contenant un catalyseur de durcissement dans la forme d'un composé alkylammonium autre que les composés méthylammonium et un cohydrolysat d'un composé organosilicié contenant un organooxysilane absorbant les UV et un oxyde de silicium à particules fines; dans lequel
le stratifié de la première et de la seconde couches est réparé en disposant un revêtement dur en silicone (troisième couche) sur le stratifié, dans lequel la troisième couche est formée à partir d'une composition d'organopolysiloxane contenant un catalyseur de durcissement basique dans la forme d'un composé méthylammonium ayant une activité de durcissement supérieure au catalyseur de durcissement dans la composition d'organopolysiloxane.

9. Un procédé de réparation d'un substrat en plastique pour vitrage automobile selon la revendication 8, dans lequel
la première couche est une couche formée à partir d'un agent de revêtement contenant un copolymère vinylique absorbant les UV comprenant (a) un monomère vinylique absorbant les UV, (b) un groupe alcoxysilyle contenant un monomère vinylique, et (c) un monomère vinylique autre que (a) et (b); et un oxyde de silicium à particules fines; et
la deuxième et la troisième couches sont respectivement une couche formée à partir d'une composition d'organopolysiloxane absorbant les UV contenant les suivants (i) à (iv):
(i)
(A) au moins un composé de silicium hydrolysable représenté par la formule (1) suivante :
R'ₐSi(OR")₍₄₋ₐ₎ (1)
dans laquelle R' représente indépendamment un groupe organique contenant 1 à 18 atomes de carbone, R" représente indépendamment un groupe organique contenant 1 à 6 atomes de carbone, et a est un nombre entier de 0 ≤ a ≤ 2; et
(B) un agent absorbant les UV réactifs qui est une benzophénone ayant un groupe alcoxysilyle;
(ii) un dioxyde de silicium à particules fines;
(iii) une résine de siloxane ayant une masse moléculaire moyenne en poids d'au moins 2.000 qui est solide à une température allant jusqu'à 40°C et qui est représentée par la formule de composition moyenne (2) suivante:
R"'_{b}Si(OR" ")_{c}(OH)_{d}O_{(4-b-c-d)/2} (2)
dans laquelle R"' représente indépendamment un groupe organique contenant 1 à 18 atomes de carbone, R" " représente indépendamment un groupe organique contenant 1 à 4 atomes de carbone, b, c et d sont des nombres satisfaisant 0,8 ≤ b ≤ 1,5, 0 ≤ c ≤ 0,3, 0,001 ≤ d ≤ 0,5 et 0,801 ≤ b + c + d <2 ; et
(iv) un catalyseur de durcissement dans une quantité de 0,0001 à 30% en poids en relation au contenu en solides des composants (i) à (iii),
la composition organopolysiloxane étant préparée à partir des composants (i) à (iv) en mélangeant les composants (iii) et (iv) avec un cohydrolysat (hydrolysat partiel) ou un hydrolysat de condensation (hydrolysat de condensation partielle) des composants (i)(A) et (ii) dans le présence de (i)(B).

10. Un procédé de réparation d'un substrat en plastique pour vitrage automobile selon la revendication 8 ou 9, dans lequel le catalyseur de durcissement de la composition d'organopolysiloxane pour la troisième couche comprend un composé organique basique (un agent de durcissement) et un composé organique acide (un agent régulateur) et le composé organique basique est un composé d'ammonium représenté par la formule générale (3) suivante:
[(R¹)(R²)(R³)(R⁴)N]X⁻ (3)
dans lequel R¹, R², R³ et R⁴ sont indépendamment un atome d'hydrogène ou un groupe alkyle ou un groupe alkyle halogéné contenant 1 à 18 atomes de carbone, dont au moins un groupe méthyle et X⁻ est un anion hydroxyde ou un anion carboxylate organique.

11. Un procédé de réparation d'un substrat en plastique pour vitrage automobile selon l'une quelconque des revendications 8 à 10, dans lequel le substrat en matière plastique comprend une résine de polycarbonate.

12. Un procédé de réparation d'un substrat en plastique pour vitrage automobile selon l'une quelconque des revendications 8 à 11, dans lequel le catalyseur de durcissement de la composition d'organopolysiloxane pour la deuxième couche est choisi parmi l'hydroxide de tetra-éthylammonium,
l'hydroxide de tetra-propylammonium,
l'hydroxide de tetra-butylammonium,
l'hydroxide de tetra-pentylammonium,
l'hydroxide de tetra-hexylammonium,
l'hydroxide de tetracyclohexylammonium,
l'hydroxide de tetrakis(trifluorométhyl)ammonium, et
les sels d'un tel hydroxide avec un acide carboxylique, et le catalyseur de durcissement de la composition d'organopolysiloxane pour la troisième couche est choisi parmi l'hydroxide de tetra-méthylammonium,
l'hydroxide de triméthylcyclohexylammonium,
l'hydroxide de triméthyl(trifluorométhyl)ammonium,
l'hydroxide de triméthyl-butylammonium, et
les sels de tel hydroxide avec un acide carboxylique.

13. Un procédé de réparation d'un substrat en plastique pour vitrage automobile selon l'une quelconque des revendications 8 à 12 dans lequel la deuxième et la troisième couche comprend en outre un agent régulateur dans la forme d'un acide carboxylique choisi parmi l'acide formique, l'acide acétique, l'acide propionique, l'acide oxalique, l'acide lactique, l'acide citrique, l'acide succinique, l'acide malonique, l'acide tartrique, et l'acide butyrique, de telle manière que le composé d'acide carboxylique ayant un bas poids moléculaire est incorporé pour la deuxième couche et un acide carboxylique ayant un haut poids moléculaire est incorporé pour la troisième couche.

14. Un procédé de réparation d'un substrat en plastique pour vitrage automobile selon la revendication 13 dans lequel le rapport de l'agent de durcissement et l'agent régulateur est de 0,5 à jusqu'à 10 moles.
